# EUROPEAN PATENT SPECIFICATION

(11) **EP 3 855 597 B1**
(45) Date of publication and mention of the grant of the patent: **26.08.2026**
(21) Application number: 19878887.9
(22) Date of filing: 01.11.2019
(51) Int. Cl.: H02J 50/12, H02J 50/80, H02J 7/00, B60L 53/122, B60L 55/00, H02J 3/32, H02J 7/34, H02M 1/08

(54) **WIRELESS ELECTRICAL POWER SUPPLY DEVICE**
DRAHTLOSE ELEKTRISCHE STROMVERSORGUNGSVORRICHTUNG
DISPOSITIF D'ALIMENTATION ÉLECTRIQUE SANS FIL

(30) Priority: 02.11.2018 JP 2018207094; 16.08.2019 JP 2019149449; 03.10.2019 JP 2019183023
(43) Date of publication of application: 28.07.2021
(73) Proprietor: Nichicon Corporation, Kyoto-shi, Kyoto 604-0845 (JP); Josho Gakuen Educational Foundation, Osaka 535-8585 (JP)
(72) Inventor: OMORI, Hideki, Osaka-shi, Osaka 535-8585 (JP); TSUNO, Masahito, Kyoto-shi, Kyoto 604-0845 (JP); YAMAGUCHI, Masashi, Kyoto-shi, Kyoto 604-0845 (JP)
(74) Representative: Abitz & Partner
(86) International application number: PCT/JP2019/043033
(87) International publication number: WO 2020/091042

(56) References cited:
- WO-A1-2012/046453
- JP-A- 2012 065 484
- US-A1- 2008 094 146
- US-A1- 2012 169 131
- US-B2- 8 947 041
- HIDEKI OMORI: "A Wireless V2H Apparatus with a New SiC-MOSFET and Unique Bidirectional Controlled Single-Ended Converter", 27 July 2017, IEEE, XP002807344
- KURODA, KODAI ET AL.: "A wireless V2H apparatus with a new SiC-MOSFET and unipue bidirectional controlled single-ended converter", 2017 IEEE 3RD INTERNATIONAL FUTURE ENERGY ELECTRONICS CONFERENCE AND ECCE ASIA, 2017, pages 298 - 303, XP033129524, DOI: 10.1109/IFEEC.2017.7992054

## Description

### TECHNICAL FIELD

The present invention relates to a wireless electrical power supply apparatus.

### BACKGROUND ART

In general, wireless electrical power supply apparatuses are used in bidirectional power transmission systems (e.g., V2H (Vehicle to Home) or V2G (Vehicle to Grid) systems) between electricity-powered vehicles, such as electric vehicles and plug-in hybrid vehicles, and residential buildings or power distribution systems. The wireless electrical power supply apparatus performs power transmission utilizing magnetic coupling between coils and therefore eliminates the need for a cable connection with an electricity-powered vehicle.

Patent Document 1 discloses a wireless electrical power supply apparatus including inverter circuits (full bridge or half bridge) in which coils and capacitors connected in series, and converters connected to the inverter circuits. The wireless electrical power supply apparatus performs control such that the converter on the transmitter side receives constant input power, and the converter on the receiver side outputs maximum power.

In the wireless electrical power supply apparatus described in Patent Document 1, the inverter circuits on the transmitter and receiver sides are bridge circuits, each consisting of a plurality of power semiconductors, and therefore tend to be high-cost and large-sized. Moreover, the wireless electrical power supply apparatus described in Patent Document 1 requires complicated control on both the transmitter and receiver sides at the start of and during power supply.

On the other hand, Non-Patent Document 1 discloses a wireless electrical power supply apparatus including single-switch converters serving as transmitter-side and receiver-side power supply units. This wireless electrical power supply apparatus can be significantly reduced in cost and size compared to the wireless electrical power supply apparatus described in Patent Document 1.

### Prior Art Document

### Patent Document

Patent Document 1: Published Japanese Patent No. 6038386

US 8 947 041 B2 discloses a generic wireless electrical power supply apparatus.

### Non-Patent Document

Non-Patent Document 1: "A Wireless V2H Apparatus with a New SiC-MOSFET and Unique Bidirectional Controlled Single-Ended Converter", Hideki Omori and seven others, July 27, 2017, IEEE [searched online October 24, 2018], <URL: https://umexpert.um.edu.my/file/publication/00005361_159948_7 1519.pdf>

### DISCLOSURE OF THE INVENTION

### PROBLEMS TO BE SOLVED BY THE INVENTION

However, in the case of the wireless electrical power supply apparatus described in Non-Patent Document 1, transmission power fluctuates due to variations of circuit constants (e.g., variations of constants among transmission coils and resonant capacitors), resulting in problems to mass production and compatibility. Accordingly, for practical use, the wireless electrical power supply apparatus described in Non-Patent Document 1 is required to be improved at least in terms of stability of transmission characteristics.

The present invention has been achieved under the above circumstances, with a problem thereof being to provide a wireless electrical power supply apparatus capable of enhancing the stability of transmission characteristics while realizing reductions in cost and size of the apparatus. The invention is defined in the appended claims and the scope of protection conferred by this specification is limited by the independent claim.

### SOLUTION TO THE PROBLEMS

The invention aims to alleviate or remedy the above problems.

In an example for understanding the invention provides a wireless electrical power supply apparatus including: a first electrical power supply unit including a first transmission coil, a first switching device including a first transistor connected in series to the first transmission coil and a first diode connected in anti-parallel to the first transistor, and a first resonant capacitor connected in parallel to either the first transmission coil or the first switching device, or both; a second electrical power supply unit including a second transmission coil, a second switching device including a second transistor connected in series to the second transmission coil and a second diode connected in anti-parallel to the second transistor, and a second resonant capacitor connected in parallel to either the second transmission coil or the second switching device, or both; a first switching control circuit configured to control turn-off of the first switching device and also control turn-on of the first switching device in synchronization with a resonant voltage in the first electrical power supply unit such that the first switching device performs a zero-voltage switching operation; a second switching control circuit configured to control turn-off of the second switching device and also control turn-on of the second switching device in synchronization with a resonant voltage in the second electrical power supply unit such that the second switching device performs a zero-voltage switching operation; and a voltage control circuit configured to control a first voltage difference between a first input voltage to the first electrical power supply unit and a first output voltage from the second electrical power supply unit during forward power transmission from the first electrical power supply unit to the second electrical power supply unit, and also control a second voltage difference between a second input voltage to the second electrical power supply unit and a second output voltage from the first electrical power supply unit during reverse power transmission from the second electrical power supply unit to the first electrical power supply unit, wherein the second switching control circuit turns off the second transistor during the forward power transmission and thereby causes the second diode to perform rectification, and the first switching control circuit turns off the first transistor during the reverse power transmission and thereby causes the first diode to perform rectification.

In this configuration, the first electrical power supply unit is a single-switch converter actuated by the first switching device, and the second electrical power supply unit is a single-switch converter actuated by the second switching device, whereby reductions in cost and size of the apparatus can be realized.

Furthermore, in this configuration, the first and second switching control circuits turn off the transistors on the receiver side and thereby cause the diodes to perform rectification, and the voltage control circuit controls the difference between the input and output voltages, whereby transmission power fluctuations due to variations of circuit constants can be compensated for. Thus, this configuration renders it possible to enhance the stability of transmission characteristics by relatively simple control.

The wireless electrical power supply apparatus includes a first DC voltage conversion portion configured to output the first input voltage and receive the second output voltage, and a second DC voltage conversion portion configured to receive the first output voltage and output the second input voltage, and can be configured such that the voltage control circuit controls the first voltage difference during the forward power transmission by controlling the first DC voltage conversion portion to change the first input voltage and also controls the second voltage difference during the reverse power transmission by controlling the second DC voltage conversion portion to change the second input voltage.

The wireless electrical power supply apparatus can be configured such that during the forward power transmission, the first electrical power supply unit and the second electrical power supply unit operate as forward converters, and the second electrical power supply unit performs a half-wave rectification operation.

The wireless electrical power supply apparatus includes a first DC voltage conversion portion configured to output the first input voltage during the forward power transmission and receive the second output voltage during the reverse power transmission, and can be configured such that the voltage control circuit controls the first voltage difference during the forward power transmission by controlling the first DC voltage conversion portion to change the first input voltage and also controls the second voltage difference during the reverse power transmission by controlling the first DC voltage conversion portion to change the second output voltage.

The wireless electrical power supply apparatus can be configured such that the voltage control circuit includes a first control circuit configured to control the first voltage difference and a second control circuit configured to control the second voltage difference, the second control circuit notifies the first control circuit of an output power value of the second electrical power supply unit, the output power value and an output voltage value of the second electrical power supply unit, or the output voltage value and an output current value of the second electrical power supply unit, during the forward power transmission, and the first control circuit notifies the second control circuit of an output power value of the first electrical power supply unit, the output power value and an output voltage value of the first electrical power supply unit, or the output voltage value and an output current value of the first electrical power supply unit, during the reverse power transmission.

The wireless electrical power supply apparatus can be configured such that the voltage control circuit controls an on-time of the first switching device within a tolerable cycle range during the forward power transmission and/or controls an on-time of the second switching device within a tolerable cycle range during the reverse power transmission.

The wireless electrical power supply apparatus can be configured such that when the first transmission coil and the second transmission coil are apart at a distance shorter than a prescribed distance, the voltage control circuit restricts power transmission between the first electrical power supply unit and the second electrical power supply unit.

In the wireless electrical power supply apparatus, the first electrical power supply unit may have a resonant circuit whose constant is different from a constant of a resonant circuit in the second electrical power supply unit.

The wireless electrical power supply apparatus can be configured such that the first electrical power supply unit includes a first changeover capacitor and a first changeover switch configured to be turned on to connect the first changeover capacitor in parallel or series to the first resonant capacitor and turned off to electrically disconnect the first changeover capacitor from the first resonant capacitor, and the second electrical power supply unit includes a second changeover capacitor and a second changeover switch configured to be turned on to connect the second changeover capacitor in parallel or series to the second resonant capacitor and turned off to electrically disconnect the second changeover capacitor from the second resonant capacitor.

A wireless electrical power supply apparatus according to another example includes: a first electrical power supply unit including a first transmission coil, a first switching device connected in series to the first transmission coil, and a first resonant capacitor connected in parallel to either the first transmission coil or the first switching device, or both; a second electrical power supply unit including a second transmission coil, a diode connected in series to the second transmission coil, and a second resonant capacitor connected in parallel to the second transmission coil; a first switching control circuit configured to control turn-off of the first switching device and also control turn-on of the first switching device in synchronization with a resonant voltage in the first electrical power supply unit such that the first switching device performs a zero-voltage switching operation; and a voltage control circuit configured to control a voltage difference between an input voltage to the first electrical power supply unit and an output voltage from the second electrical power supply unit during power transmission from the first electrical power supply unit to the second electrical power supply unit.

A wireless electrical power supply apparatus according to still another embodiment of the present invention includes: a first electrical power supply unit connected to a first DC power source; a second electrical power supply unit connected to a second DC power source; and a control portion configured to control the first electrical power supply unit and the second electrical power supply unit, wherein the first electrical power supply unit and the second electrical power supply unit transmit power to each other, the first electrical power supply unit includes a first transmission coil, a first switching device connected in series to the first transmission coil, and a first resonant capacitor connected in parallel to either the first transmission coil or the first switching device, or both, the second electrical power supply unit includes a second transmission coil, a second switching device connected in series to the second transmission coil, and a second resonant capacitor connected in parallel to either the second transmission coil or the second switching device, or both, and the control portion includes a first turn-on control circuit configured to control turn-on of the first switching device in synchronization with a resonant voltage induced by the first transmission coil and the first resonant capacitor such that the first switching device performs a zero-voltage switching operation, and a second turn-on control circuit configured to control turn-on of the second switching device in synchronization with a resonant voltage induced by the second transmission coil and the second resonant capacitor such that the second switching device performs a zero-voltage switching operation, and a cross-phase shift control circuit configured to perform control to cause a predetermined phase difference between turn-off of the first switching device and turn-off of the second switching device.

In this configuration, the first electrical power supply unit is a single-switch converter actuated by the first switching device, and the second electrical power supply unit is a single-switch converter actuated by the second switching device, whereby reductions in cost and size of the apparatus can be realized.

Furthermore, in this configuration, the first switching device and the second switching device perform a zero-voltage switching operation and are controlled to cause a predetermined phase difference between switching of the first switching device and switching of the second switching device, whereby the stability of transmission characteristics and the ability to control transmission power can be enhanced.

In the wireless electrical power supply apparatus, the cross-phase shift control circuit preferably performs control to cause the phase difference between turn-off of the first switching device and turn-off of the second switching device.

In the wireless electrical power supply apparatus, the phase difference is preferably 45 to 315 degrees.

The wireless electrical power supply apparatus can be configured such that the cross-phase shift control circuit includes a phase difference detector configured to directly or indirectly sense the phase difference, a phase difference instruction circuit configured to directly or indirectly indicate a target value for the phase difference, a feedback control portion configured to control the phase difference by feedback control comparing a detection value from the phase difference detector and the target value from the phase difference instruction circuit, and a conductive-time-variable portion configured to change a conductive time of the second switching device in accordance with an output from the feedback control portion.

The wireless electrical power supply apparatus can be configured such that the phase difference detector indirectly detects the phase difference by detecting transmission power, and the phase instruction circuit indirectly indicates the target value by indicating transmission power.

The wireless electrical power supply apparatus can be configured such that the cross-phase shift control circuit includes a sensing element configured to sense a change in voltage of the first transmission coil by contactless magnetic or electric field sensing.

The wireless electrical power supply apparatus can be configured such that the cross-phase shift control circuit includes a conductive time control circuit configured to control a conductive time of the first switching device to adjust an operating frequency of the first electrical power supply unit to a predetermined value.

The wireless electrical power supply apparatus can be configured such that the cross-phase shift control circuit controls the phase difference to adjust transmission power between the first transmission coil and the second transmission coil to a predetermined value.

The wireless electrical power supply apparatus can be configured such that the cross-phase shift control circuit includes a timing signal transmission circuit configured to transmit an optical or radio signal about switching timing of the first switching device, and a timing signal reception circuit configured to receive the optical or radio signal transmitted by the timing signal transmission circuit.

The wireless electrical power supply apparatus can be configured such that the second switching device includes a transistor and an anti-parallel diode connected in anti-parallel to the transistor, and the cross-phase shift control circuit includes a phase difference detector configured to directly or indirectly sense the phase difference, a phase difference instruction circuit configured to directly or indirectly indicate a target value for the phase difference, a feedback control portion configured to control the phase difference by feedback control comparing a detection value from the phase difference detector and the target value from the phase difference instruction circuit, a resonant current sensor configured to detect a zero cross point of a current flowing through the second transmission coil, and a conductive-time-variable portion configured to control an on-time of the transistor that follows turn-off of the anti-parallel diode, in accordance with a detection result from the resonant current sensor and an output from the feedback control portion.

### EFFECT OF THE INVENTION

The present invention renders it possible to provide a wireless electrical power supply apparatus capable of enhancing the stability of transmission characteristics while realizing reductions in cost and size of the apparatus.

### BRIEF DESCRIPTION OF THE DRAWINGS

FIG. 1 is a diagram illustrating a wireless electrical power supply apparatus according to a first example.
FIG. 2 is a graph showing the relationship between an input voltage and transmission power of the wireless electrical power supply apparatus according to the first example.
FIG. 3 is a timing chart describing a zero-voltage switching operation of a first switching device in the first example.
FIG. 4 is a timing chart describing operation modes of the wireless electrical power supply apparatus according to the first example.
FIG. 5 provides diagrams illustrating current paths in the operation modes of the wireless electrical power supply apparatus according to the first example
FIG. 6 is a diagram illustrating a wireless electrical power supply apparatus according to a second example.
FIG. 7 is a graph showing the relationship between an input voltage and transmission power of the wireless electrical power supply apparatus according to the second example.
FIG. 8 is a diagram illustrating a wireless electrical power supply apparatus according to a third example.
FIG. 9 is a diagram illustrating a variant receiver-side configuration in the third example.
FIG. 10 is a diagram illustrating a wireless electrical power supply apparatus according to an embodiment of the invention.
FIG. 11 is a timing chart for components of the wireless electrical power supply apparatus according to an embodiment of the invention.
FIG. 12 is a graph showing the relationship among phase difference, transmission power, and operating frequency for the wireless electrical power supply apparatus according to an embodiment of the invention.
FIG. 13 is a diagram illustrating a wireless electrical power supply apparatus.
FIG. 14 is a diagram showing an operation principle of the wireless electrical power supply
FIG. 15 is a diagram illustrating a wireless electrical power supply apparatus
FIG. 16 is a timing chart for components of the wireless electrical power supply apparatus

### MODES FOR CARRYING OUT THE INVENTION

Hereinafter, embodiments of a wireless electrical power supply apparatus according to the present invention will be described with reference to the accompanying drawings.

### [First Embodiment]

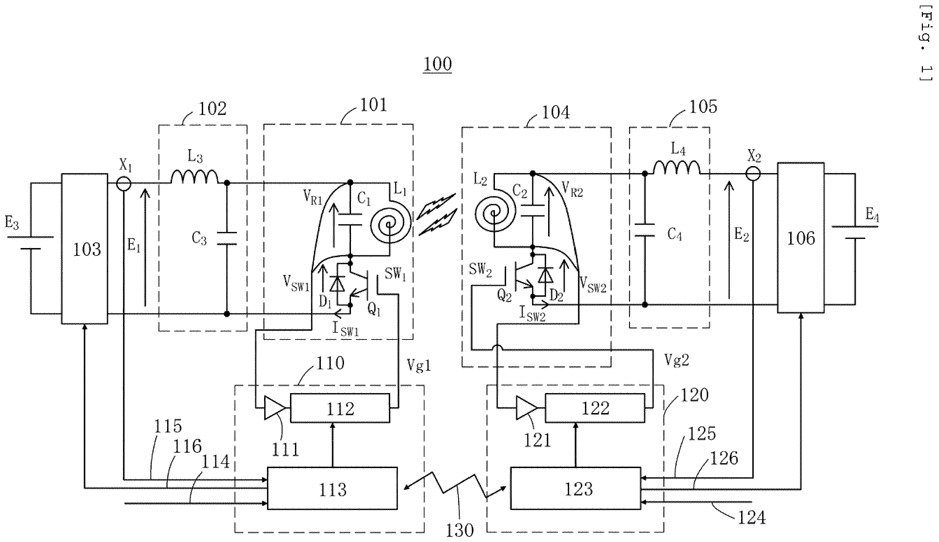

FIG. 1 illustrates a wireless electrical power supply apparatus 100 according to a first illustrative example. The wireless electrical power supply apparatus 100 is divided into primary and secondary sides; the primary side includes a first electrical power supply unit 101, a first filter circuit 102, a first DC voltage conversion portion 103, and a first control portion 110, and the secondary side includes a second electrical power supply unit 104, a second filter circuit 105, a second DC voltage conversion portion 106, and a second control portion 120.

The components of the primary side are provided in, for example, a residential building, and the components of the secondary side are provided in, for example, an electricity-powered vehicle such as an electric vehicle or a plug-in hybrid car. The wireless electrical power supply apparatus 100 performs bidirectional power transmission between the primary side and the secondary side. In the following, the power transmission from the primary side to the secondary side will be referred to as the forward power transmission, and the power transmission from the secondary side to the primary side will be referred to as the reverse power transmission.

The first electrical power supply unit 101 is a single-switch converter including a first switching device SW₁, a first transmission coil L₁, and a first resonant capacitor C₁. The first resonant capacitor C₁ is connected in parallel to either the first transmission coil L₁ or the first switching device SW₁, or both (in the present embodiment, the first transmission coil L₁). In the case where the wireless electrical power supply apparatus is used in an electric car, the wireless electrical power supply apparatus is required to operate within a specific frequency range around a nominal frequency of 85 kHz. Accordingly, the resonant frequency that is determined by the first transmission coil L₁ and the first resonant capacitor C₁ is suitably selected to be higher than the operating frequency. For example, in the case of several-kilowatt power transmission, the resonant frequency to be used ranges from 1.1 times to less than twice the operating frequency.

The first switching device SW₁ includes a first transistor Q₁ connected in series to the first transmission coil L₁, and a first diode D₁ connected in anti-parallel to the first transistor Q₁. The first transistor Q₁ is a power semiconductor device such as an IGBT (insulated-gate bipolar transistor), a MOSFET (metal-oxide-semiconductor field-effect transistor), a bipolar transistor, or a SiC (silicon carbide) semiconductor. The first diode D₁ is an internal (parasitic) diode of the first transistor Q₁ or a diode independent of the first transistor Q₁.

The first filter circuit 102 includes a first capacitor C₃ and a first coil L₃. The first capacitor C₃ is connected at one terminal to a high-potential terminal of the first DC voltage conversion portion 103 via the first coil L₃ and at the other terminal to a low-potential terminal of the first DC voltage conversion portion 103.

The first DC voltage conversion portion 103 is a bidirectional DC/DC converter. The first DC voltage conversion portion 103 is connected to a first power source E₃. The first power source E₃ is, for example, a bidirectional AC/DC converter. The first DC voltage conversion portion 103 performs a forward voltage conversion operation for raising or lowering an input DC voltage from the first power source E₃ and outputting the voltage to the first filter circuit 102, and also performs a reverse voltage conversion operation for lowering or raising an input DC voltage from the first filter circuit 102 and outputting the voltage to the first power source E₃.

The second electrical power supply unit 104 is a single-switch converter including a second switching device SW₂, a second transmission coil L₂, and a second resonant capacitor C₂. The second resonant capacitor C₂ is connected in parallel to either the second transmission coil L₂ or the second switching device SW₂, or both (in the present embodiment, the second transmission coil L₂). The resonant frequency that is determined by the second transmission coil L₂ and the second resonant capacitor C₂ is suitably selected to be higher than the operating frequency. For example, in the case of several-kilowatt power transmission, the resonant frequency to be used ranges from 1.1 times to less than twice the operating frequency.

The second switching device SW₂ includes a second transistor Q₂ connected in series to the second transmission coil L₂ and a second diode D₂ connected in anti-parallel to the second transistor Q₂. Similar to the first transistor Q₁, the second transistor Q₂ is a power semiconductor device such as an IGBT, a MOSFET, a bipolar transistor, or a SiC semiconductor. The second diode D₂ is an internal (parasitic) diode of the second transistor Q₂ or a diode independent of the second transistor Q₂.

The second filter circuit 105 includes a second capacitor C₄ and a second coil L₄. The second capacitor C₄ is connected at one terminal to a high-potential terminal of the second DC voltage conversion portion 106 via the second coil L₄ and at the other terminal to a low-potential terminal of the first DC voltage conversion portion 106.

The second DC voltage conversion portion 106 is a bidirectional DC/DC converter. The second DC voltage conversion portion 106 is connected to a second power source E₄. The second power source E₄ is, for example, a storage battery provided in an electricity-powered vehicle. The second DC voltage conversion portion 106 performs a forward voltage conversion operation for raising or lowering an input DC voltage from the second filter circuit 105 and outputting the voltage to the second power source E₄, and also performs a reverse voltage conversion operation for lowering or raising an input DC voltage from the second power source E₄ and outputting the voltage to the second filter circuit 105.

The first control portion 110 includes a first resonant voltage sensing circuit 111, a first synchronization circuit 112, and a first control circuit 113. Similarly, the second control portion 120 includes a second resonant voltage sensing circuit 121, a second synchronization circuit 122, and a second control circuit 123.

The first resonant voltage sensing circuit 111 and the first synchronization circuit 112 collectively correspond to the "first switching control circuit" of the present invention. The second resonant voltage sensing circuit 121 and the second synchronization circuit 122 collectively correspond to the "second switching control circuit" of the present invention. The first control circuit 113 and the second control circuit 123 correspond to the "voltage control circuits" of the present specification.

The first resonant voltage sensing circuit 111 measures an end-to-end voltage V_{R1} of the first resonant capacitor C₁ during the forward power transmission, and thereby senses a zero cross point of a first resonant voltage induced by the first transmission coil L₁ and the first resonant capacitor C₁. After the sensing of the zero cross point, the first resonant voltage sensing circuit 111 outputs a zero cross signal to the first synchronization circuit 112.

The first synchronization circuit 112 turns on the first transistor Q₁ in synchronization with the first resonant voltage, on the basis of the zero cross signal, such that the first transistor Q₁ performs a zero-voltage switching operation. Moreover, the first synchronization circuit 112 turns off the first transistor Q₁ during the reverse power transmission in accordance with an instruction (control instruction) from the first control circuit 113 such that the first diode D₁ performs a rectification operation.

The first synchronization circuit 112 performs on/off control of the first transistor Q₁ during the forward power transmission, so that a current flows to the first transmission coil L₁ and the first resonant capacitor C₁. As a result, magnetic field resonance (equivalent in meaning to magnetic resonance or magnetic resonation) causes a current to flow to the second transmission coil L₂ and the second resonant capacitor C₂ at some distance. In this manner, the first electrical power supply unit 101 performs contactless power transmission to the second electrical power supply unit 104.

The second resonant voltage sensing circuit 121 measures an end-to-end voltage V_{R2} of the second resonant capacitor C₂ during the reverse power transmission and thereby senses a zero cross point of a second resonant voltage induced by the second transmission coil L₂ and the second resonant capacitor C₂. After the sensing of the zero cross point, the second resonant voltage sensing circuit 121 outputs a zero cross signal to the second synchronization circuit 122.

The second synchronization circuit 122 turns on the second transistor Q₂ in synchronization with the second resonant voltage, on the basis of the zero cross signal, such that the second transistor Q₂ performs a zero-voltage switching operation. Moreover, the second synchronization circuit 122 turns off the second transistor Q₂ during the forward power transmission in accordance with an instruction (control instruction) from the second control circuit 123 such that the second diode D₂ performs a rectification operation.

The second synchronization circuit 122 performs on/off control of the second transistor Q₂ during the reverse power transmission, so that a current flows to the second transmission coil L₂ and the second resonant capacitor C₂. As a result, magnetic field resonance causes a current to flow to the first transmission coil L₁ and the first resonant capacitor C₁ at some distance. In this manner, the second electrical power supply unit 104 performs contactless power transmission to the first electrical power supply unit 101.

The first control circuit 113 performs first voltage difference control during the forward power transmission so as to control the difference (first voltage difference) between a first input voltage E₁ to the first electrical power supply unit 101 and a first output voltage E₂ from the second electrical power supply unit 104, thereby controlling output power that is to be provided by the second electrical power supply unit 104 (i.e., transmission power from the first electrical power supply unit 101 to the second electrical power supply unit 104).

More specifically, the first control circuit 113 starts the first voltage difference control in response to a first control instruction 114 provided from outside or a charge start notification included in an intercommunication signal 130 exchanged with the second control circuit 123. An example of the intercommunication signal 130 to be used is a Wi-Fi or Bluetooth (registered trademark) short-range wireless communication signal. After the start of the first voltage difference control, the first control circuit 113 obtains values of the first input voltage E₁ and/or values of a first input current in predetermined cycles on the basis of first detection signals 115 from a first detection means X₁ (e.g., a current transformer). The first input current is a current flowing from the first DC voltage conversion portion 103 to the first filter circuit 102.

Furthermore, the first control circuit 113 obtains output power information in predetermined cycles from the intercommunication signal 130 exchanged with the second control circuit 123. The output power information indicates an output power value, the output power value and a value of the first output voltage E₂, or the value of the first output voltage E₂ and a value of a first output current. The first output current is a current flowing from the second filter circuit 105 to the second DC voltage conversion portion 106.

While obtaining necessary information as described above, the first control circuit 113 outputs a first control signal 116 to the first DC voltage conversion portion 103 with a view to controlling the first input voltage E₁ and hence the first voltage difference such that the output power value becomes equal to a predetermined target power value.

In a specific control method, when the output power information indicates only the output power value, the first control circuit 113 controls the first input voltage E₁ with reference to a pre-memorized lower limit of the first output voltage E₂, such that the first input voltage E₁ becomes higher than the lower limit, while setting the output power value to the predetermined target power value.

When the output power information indicates the value of the first output voltage E₂ and the output power value, the first control circuit 113 compares the first output voltage E₂ with the first input voltage E₁ and controls the first input voltage E₁ such that the first input voltage E₁ becomes higher than the first output voltage E₂, while setting the output power value to the predetermined target power value.

When the output power information indicates the value of the first output voltage E₂ and the value of the first output current, the first control circuit 113 compares the first output voltage E₂ with the first input voltage E₁ and controls the first input voltage E₁ such that the first input voltage E₁ becomes higher than the first output voltage E₂. Simultaneously, the first control circuit 113 calculates the output power value on the basis of the output power information, and controls the first input voltage E₁ such that the calculated power value becomes equal to the predetermined target power value.

It should be noted that when the value of the first output voltage E₂ is constant and the first control circuit 113 has memorized therein information (e.g., a relational expression) representing the relationship between the first input voltage E₁ and the output power, the first control circuit 113 can control the first input voltage E₁ without communicating with the second control circuit 123 at the start of and during power supply.

Furthermore, when the first control circuit 113 has memorized therein information representing the relationship between the first input voltage E₁ and the first voltage difference and the relationship between the first voltage difference and the output power, the first control circuit 113 can also control the first input voltage E₁ without communicating with the second control circuit 123. However, to allow the output power value to approach the target power value with more accuracy, the first control circuit 113 preferably obtains the output power information from the intercommunication signal 130 exchanged with the second control circuit 123.

The second control circuit 123 performs second voltage difference control during the reverse power transmission so as to control the difference (second voltage difference) between a second input voltage E₂ to the second electrical power supply unit 104 and a second output voltage E₁ from the first electrical power supply unit 101, thereby controlling output power that is to be provided by the first electrical power supply unit 101 (i.e., transmission power from the second electrical power supply unit 104 to the first electrical power supply unit 101).

More specifically, the second control circuit 123 starts the second voltage difference control in response to a second control instruction 124 provided from outside or a discharge start notification included in an intercommunication signal 130 exchanged with the first control circuit 113. After the start of the second voltage difference control, the second control circuit 123 obtains values of the second input voltage E₂ and/or values of a second input current in predetermined cycles on the basis of second detection signals 125 from a second detection means X₂ (e.g., a current transformer). The second input current is a current flowing from the second DC voltage conversion portion 106 to the second filter circuit 105.

Furthermore, the second control circuit 123 obtains output power information in predetermined cycles from the intercommunication signal 130 exchanged with the first control circuit 113. The output power information indicates an output power value, the output power value and a value of the second output voltage E₁, or the value of the second output voltage E₁ and a value of a second output current. The second output current is a current flowing from the first filter circuit 102 to the first DC voltage conversion portion 103.

While obtaining necessary information as described above, the second control circuit 123 outputs a second control signal 126 to the second DC voltage conversion portion 106 with a view to controlling the second input voltage E₂ and hence the second voltage difference such that the output power value becomes equal to a predetermined target power value. The specific method of control is the same as that used by the first control circuit 113 during the forward power transmission.

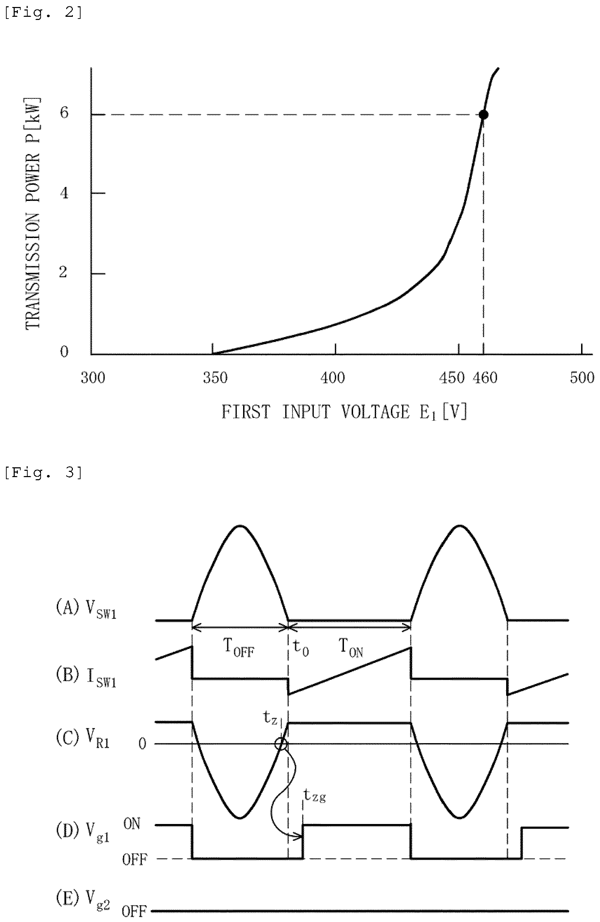

FIG. 2 shows the relationship between the first input voltage E₁ and transmission power P from the first electrical power supply unit 101 to the second electrical power supply unit 104 during the forward power transmission. In FIG. 2, the first output voltage E₂ is constant at 350V. The transmission power P can be calculated based on, for example, a second detection signal 125 from the second detection means X₂.

As can be appreciated from FIG. 2, when the first input voltage E₁ is changed by 110V from 350V to 460V, the transmission power P changes from 0 kW to 6 kW. In this manner, in the case of the wireless electrical power supply apparatus 100, the transmission power P can be controlled by controlling the first voltage difference between the first input voltage E₁ and the first output voltage E₂.

For example, even when there are variations in electrostatic capacitance among second resonant capacitors C₂, the transmission power P can be stably controlled from zero to a desired value by changing the first input voltage E₁. Note that in FIG. 2, the lower limit of the first input voltage E₁ is the same as the first output voltage E₂ but does not have to be the same.

Next, a zero-voltage switching operation of the first switching device SW₁ during the forward power transmission will be described with reference to FIG. 3. Note that the second switching device SW₂ also performs a zero-voltage switching operation during the reverse power transmission in a similar manner to that performed by the first switching device SW₁ during the forward power transmission.

FIG. 3 provides waveforms of: (A) an end-to-end voltage V_{SW1} of the first switching device SW₁; (B) a current I_{SW1} flowing through the first switching device SW₁; (C) an end-to-end voltage V_{R1} of the first resonant capacitor C₁; (D) a drive gate voltage V_{g1} of the first transistor Q₁; and (E) a drive gate voltage V_{g2} of the second transistor Q₂. The first transistor Q₁ and the second transistor Q₂ are turned on when the drive gate voltages V_{g1} and V_{g2} are high and turned off when the drive gate voltages V_{g1} and V_{g2} are low.

During the period T_{OFF} in which the first switching device SW₁ is off, the first resonant capacitor C₁ has a first resonant voltage, which is induced by the first transmission coil L₁ and the first resonant capacitor C₁, applied to both terminals thereof.

Once the first resonant voltage sensing circuit 111 detects a zero cross point t_{z} where the end-to-end voltage V_{R1} of the first resonant capacitor C₁ crosses zero, the first synchronization circuit 112 turns on the first transistor Q₁ at time t_{zg}, synchronous to the zero cross point t_{z}, by switching the drive gate voltage V_{g1} of the first transistor Q₁ from low to high.

Here, depending on the state of a load (e.g., the first power source E₃), the end-to-end voltage V_{SW1} of the first switching device SW₁ might be reduced in amplitude and hence might not reach zero. On the other hand, the end-to-end voltage V_{R1} of the first resonant capacitor C₁ crosses zero regardless of the size of amplitude. Accordingly, in the present embodiment, the first resonant voltage sensing circuit 111 is configured to detect the zero cross point t_{z} of the end-to-end voltage V_{R1} of the first resonant capacitor C₁.

Furthermore, to realize the zero-voltage switching operation of the first switching device SW₁, the first transistor Q₁ may be turned on at time t₀. However, time t₀ might be shifted depending on the state of a load (e.g., the first power source E₃). Accordingly, in the present example, the first transistor Q₁ is turned on at time t_{zg} later than time t₀ in order to allow a slight leeway.

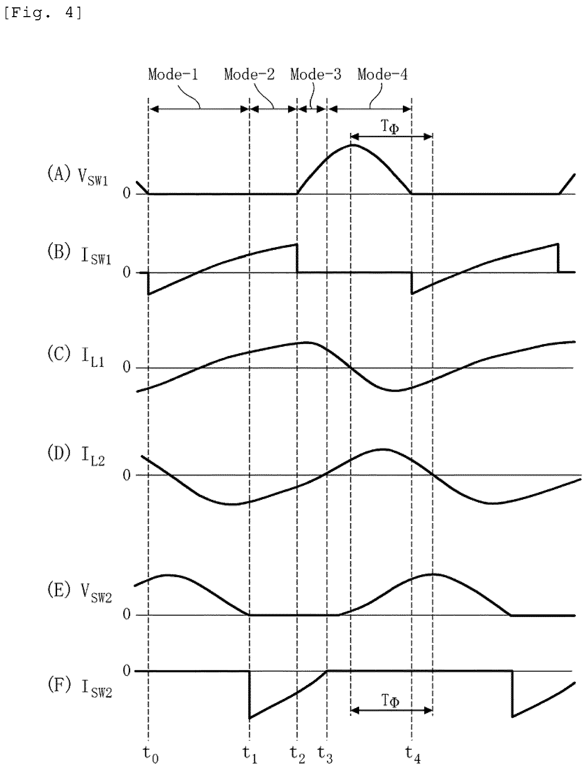

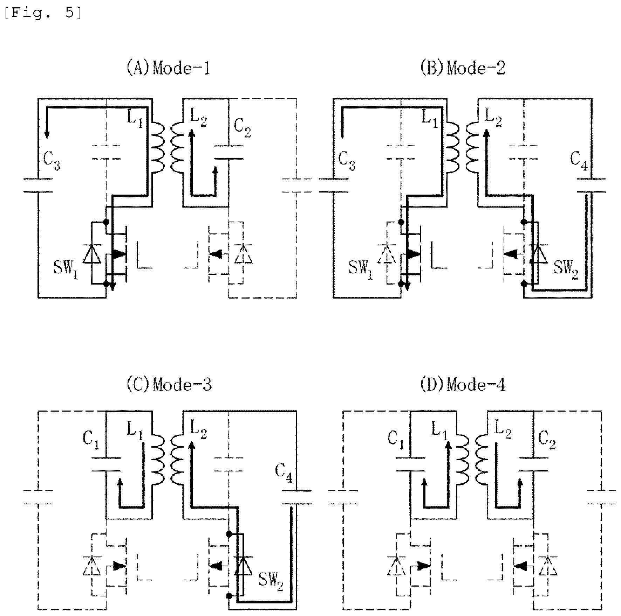

Next, operation modes (Mode-1, Mode-2, Mode-3, and Mode-4) of the wireless electrical power supply apparatus 100 during the forward power transmission will be described with reference to FIGS. 4 and 5.

FIG. 4 provides waveforms of: (A) the end-to-end voltage V_{SW1} of the first switching device SW₁; (B) the current I_{SW1} flowing through the first switching device SW₁; (C) a current I_{L1} flowing through the first transmission coil L₁; (D) a current I_{L2} flowing through the second transmission coil L₂; (E) an end-to-end voltage V_{SW2} of the second switching device SW₂; and (F) a current I_{SW2} flowing through the second switching device SW₂.

FIG. 5 provides diagrams schematically illustrating currents flowing in the first electrical power supply unit 101 and the second electrical power supply unit 104 during Mode-1, Mode-2, Mode-3, and Mode-4 periods respectively spanning from time t₀ to time t₁, from time t₁ to time t₂, from time t₂ to time t₃, and from time t₃ to time t₄ (= t₀), as shown in FIG. 4.

It should be noted that in FIG. 5, the first electrical power supply unit 101 includes the first capacitor C₃, and the second electrical power supply unit 104 includes the second capacitor C₄. Moreover, in FIG. 5, the currents flowing through the first transmission coil L₁ and the second transmission coil L₂ are indicated by double-headed arrows as being changeable between positive and negative, as shown in FIG. 4.

Once the end-to-end voltage V_{SW1} of the first switching device SW₁ reaches zero at time t₀ (= t₄), the Mode-1 period starts. During the Mode-1 period, the first switching device SW₁ is turned on by the first diode D₁ thereof automatically becoming conductive. Thereafter, the first transistor Q₁ is turned on by a zero-voltage switching operation.

During the period (from the Mode-1 period to the Mode-2 period) in which the first switching device SW₁ is kept on, the first input voltage E₁ is being applied to the first transmission coil L₁, and therefore the currents I_{SW1} and I_{L1} gently change from negative to positive. Once the current I_{SW1} changes from negative to positive, the current flowing through the first diode D₁ smoothly flows through the first transistor Q₁, with the result that the first switching device SW₁ continues to be on. Note that in the case where the first transistor Q₁ has a lower on-resistance than the first diode D₁, the current I_{SW1} flows through the first transistor Q₁ after the first transistor Q₁ is turned on.

During the Mode-1 period, the end-to-end voltage V_{SW2} of the second switching device SW₂ gently rises and falls to zero along a resonance curve. During the Mode-1 period, no current I_{SW2} flows due to the second switching device SW₂ being off, and the current I_{L2} gently changes from positive to negative and reaches a negative peak.

Once the end-to-end voltage V_{SW2} of the second switching device SW₂ reaches zero at time t₁, the Mode-2 period starts. During the Mode-2 period, the second switching device SW₂ is turned on by the second diode D₂ thereof automatically becoming conductive. During the period (from the Mode-2 period to the Mode-3 period) in which the second switching device SW₂ is kept on, the second input voltage E₂ is being applied to the second transmission coil L₂, and therefore the currents I_{SW2} and I_{L2} change from negative toward zero.

The drive gate voltage V_{g1} of the first switching device SW₁ changes from high to low at time t₂ after a lapse of a predetermined time period (e.g., a time period preset by the first synchronization circuit 112 such that the first resonant voltage has a zero cross cycle that falls within a predetermined range), with the result that the first transistor Q₁ is turned off, and the Mode-3 period starts.

During the Mode-3 period, the first switching device SW₁ is turned off, so that the current that is stored on the first transmission coil L₁ flows into the first resonant capacitor C₁, thereby rendering the first electrical power supply unit 101 in a resonant state. The end-to-end voltage V_{SW1} of the first switching device SW₁ gently rises along a resonance curve. The current I_{L1} flowing through the first transmission coil L₁ is a resonant current and gently decreases after reaching a positive peak.

During the Mode-3 period, the currents I_{SW2} and I_{L2} change from negative toward zero. Once the current I_{SW2} becomes zero at time t₃, i.e., the current flowing through the second diode D₂ stops flowing, the Mode-3 period ends, and the Mode-4 period starts.

During the Mode-4 period, the second switching device SW₂ (the second diode D₂) is turned off, so that the current that is stored on the second transmission coil L₂ flows into the second resonant capacitor C₂, thereby rendering the second electrical power supply unit 104 in a resonant state. The end-to-end voltage V_{SW2} of the second switching device SW₂ gently rises along a resonance curve. Since the second switching device SW₂ is off, no current I_{SW2} flows, but the current I_{L2} gently rises and thereafter gently falls.

During the Mode-4 period, the current I_{L1} gently changes from positive to negative. The end-to-end voltage V_{SW1} of the first switching device SW₁ gently rises and falls along a resonance curve. Once the end-to-end voltage V_{SW1} of the first switching device SW₁ reaches zero at time t₄, the Mode-4 period ends.

The current I_{L2} flowing through the second transmission coil L₂ has a phase difference Tϕ from the current I_{L1} flowing through the first transmission coil L₁, corresponding to the first voltage difference between the first input voltage E₁ and the first output voltage E₂, as shown in FIG. 4. Accordingly, the wireless electrical power supply apparatus 100 can provide desired transmission power by controlling the first voltage difference to cause a phase difference between the current I_{SW1} flowing through the first switching device SW₁ and the current I_{SW2} flowing through the second switching device SW₂.

It can be appreciated from the foregoing that during the forward power transmission, the first electrical power supply unit 101 on the power transmission side and the second electrical power supply unit 104 on the power reception side operate as forward converters, and that the second electrical power supply unit 104 performs a half-wave rectification operation. It is advantageous that even when the second electrical power supply unit 104 (i.e., the receiver-side electrical power supply unit) performs a half-wave rectification operation with a simple configuration, it is still possible to transmit power greater than or equal to the power that can be transmitted by a normal wireless electrical power supply apparatus performing a full-wave rectification operation. The reason for this is as follows. Specifically, in the case of the full-wave rectification operation, a resonant voltage in a parallel resonant circuit consisting of the second transmission coil L₂ and the second resonant capacitor C₂ is clamped at the level of the first output voltage E₂ by a rectification element (diode) being rendered conductive regardless of a positive or negative half wave, resulting in an insignificant resonance effect and hence no increase in transmission power from the first electrical power supply unit 101. On the other hand, in the case of the half-wave rectification operation, some resonance effect can be achieved during a half-wave period, in which the rectification element (i.e., the second diode D₂) is not conductive, resulting in an increase in transmission power from the first electrical power supply unit 101.

While the foregoing has been provided taking as examples the operations during the forward power transmission, the same applies to operations during the reverse power transmission. Specifically, the wireless electrical power supply apparatus 100 can provide desired transmission power by controlling the second voltage difference to cause a phase difference between the currents I_{SW1} and I_{SW2}. Moreover, during the reverse power transmission, the first electrical power supply unit 101 on the power reception side and the second electrical power supply unit 104 on the power transmission side operate as forward converters, and the first electrical power supply unit 101 performs a half-wave rectification operation.

In the wireless electrical power supply apparatus 100 according to the present embodiment, the first electrical power supply unit 101 is a single-switch converter actuated by the first switching device SW₁, and the second electrical power supply unit 104 is a single-switch converter actuated by the second switching device SW₂. In the case of an electric car, the power semiconductor device that is used as the first switching device SW₁ is relatively expensive because of requirements for high-speed switching performance of about 90 kHz and low loss and high withstand voltage characteristics. Moreover, the power semiconductor device is normally required to have cooling fins, and therefore providing a plurality of power semiconductor devices requires some space for accommodating the power semiconductor devices. Further, the lower the number of switching devices to be controlled is, the more readily the circuit that controls the timing of switching the switching devices can perform such control; in the case where the wireless electrical power supply apparatus is of a bridge converter type using a plurality of power semiconductors, accurate dead-time control is required for avoiding a malfunction due to two serially connected switching devices in an arm being turned on at the same time. On the other hand, when compared to such a wireless electrical power supply apparatus of a bridge converter type, the wireless electrical power supply apparatus 100 according to the present example can be reduced in cost and size.

The wireless electrical power supply apparatus 100 according to the present example employs a parallel resonant circuit configuration and therefore renders it possible to eliminate the need for specialized operations at the start of and during power supply and thereby perform transmission power control simply by controlling the difference between input and output voltages.

The wireless electrical power supply apparatus 100 according to the present embodiment can compensate for changes in transmission power due to variations of circuit constants by controlling the difference between input and output voltages. Specifically, the wireless electrical power supply apparatus 100 according to the present embodiment controls the difference between input and output voltages and thereby compensate for a difference in transmission power phase, which is a major cause of changes in transmission power. Thus, the wireless electrical power supply apparatus 100 according to the present embodiment can enhance the stability of transmission characteristics by relatively simple control.

Furthermore, the wireless electrical power supply apparatus 100 according to the present embodiment can compensate for a phase difference in transmission power by controlling the difference between input and output voltages, as described above, and therefore can allow both the primary and secondary sides to eliminate the need for means of detecting a phase on the transmitter side and communicating the detection to the receiver side and circuits configured to perform cross-phase shift control (the control resulting in a predetermined phase difference between switching of the first switching device SW₁ and switching of the second switching device SW₂) on the receiver side. This results in a simplified apparatus configuration and eliminates the need for high-speed communication about phase information.

For example, the intercommunication signal 130 includes no phase information and therefore can be a lower speed signal than signals for high-speed communication about phase information. Thus, the wireless electrical power supply apparatus 100 according to the present embodiment renders it possible to eliminate the need for high-speed communication about phase information and thereby enhance interconnectivity.

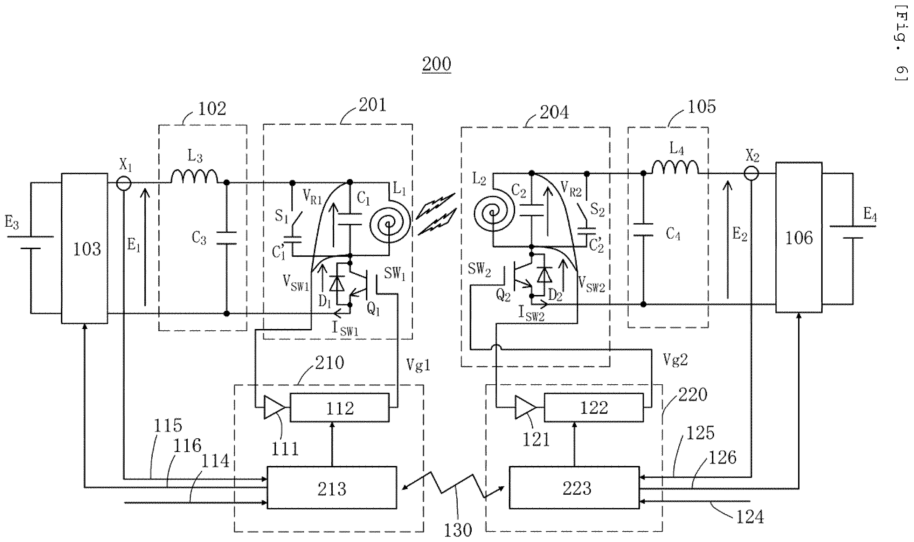

FIG. 6 illustrates a wireless electrical power supply apparatus 200 according to a second example. The wireless electrical power supply apparatus 200 has the same components as those in the first embodiment, except a first electrical power supply unit 201, a first control circuit 213 of a first control portion 210, a second electrical power supply unit 204, and a second control circuit 223 of a second control portion 220.

The first electrical power supply unit 201 is realized by additionally providing the first electrical power supply unit 101 in the first embodiment with a series circuit consisting of a first changeover capacitor C₁' and a first changeover switch S₁. The series circuit is connected in parallel to the first resonant capacitor C₁. The first changeover switch S₁ is, for example, a semiconductor switch or relay.

The first changeover switch S₁ toggles between on and off under control of the first control circuit 213. When the first changeover switch S₁ is on, the first changeover capacitor C₁' is connected in parallel to the first resonant capacitor C₁, and when the first changeover switch S₁ is off, the first changeover capacitor C₁' is electrically disconnected from the first resonant capacitor C₁.

The first control circuit 213 is realized by additionally providing the first control circuit 113 in the first embodiment with the function of causing the first changeover switch S₁ to toggle between on and off. The first control circuit 213 includes, for example, a driver circuit for the first changeover switch S₁.

The second electrical power supply unit 204 is obtained by additionally providing the second electrical power supply unit 104 in the first embodiment with a series circuit consisting of a second changeover capacitor C₂' and a second changeover switch S₂. The series circuit is connected in parallel to the second resonant capacitor C₂. The second changeover switch S₂ is, for example, a semiconductor switch or relay.

The second changeover switch S₂ toggles between on and off under control of the second control circuit 223. When the second changeover switch S₂ is on, the second changeover capacitor C₂' is connected in parallel to the second resonant capacitor C₂, and when the second changeover switch S₂ is off, the second changeover capacitor C₂' is electrically disconnected from the second resonant capacitor C₂.

The second control circuit 223 is obtained by additionally providing the second control circuit 123 in the first embodiment with the function of causing the second changeover switch S₂ to toggle between on and off. The second control circuit 223 includes, for example, a driver circuit for the second changeover switch S₂.

In the case of the forward power transmission, the first control circuit 213 turns off the first changeover switch S₁ in response to a first control instruction 114, or a charge start notification included in an intercommunication signal 130. On the other hand, the second control circuit 223 turns on the second changeover switch S₂ in response to the charge start notification included in the intercommunication signal 130, or a second control instruction 124. Specifically, the resonant frequency is set higher on the power transmission side than on the power reception side. This changes constants of a resonant circuit in the second electrical power supply unit 204. After the turn-off of the first changeover switch S₁ and the turn-on of the second changeover switch S₂, the first control circuit 213 starts first voltage difference control.

In the case of the reverse power transmission, the second control circuit 223 turns off the second changeover switch S₂ in response to a second control instruction 124, or a discharge start notification included in an intercommunication signal 130. On the other hand, the first control circuit 213 turns on the first changeover switch S₁ in response to the discharge start notification included in the intercommunication signal 130, or a first control instruction 114. Specifically, the resonant frequency is set higher on the transmitter side than on the receiver side. This changes constants of a resonant circuit in the first electrical power supply unit 201. After the turn-on of the first changeover switch S₁ and the turn-off of the second changeover switch S₂, the second control circuit 223 starts second voltage difference control.

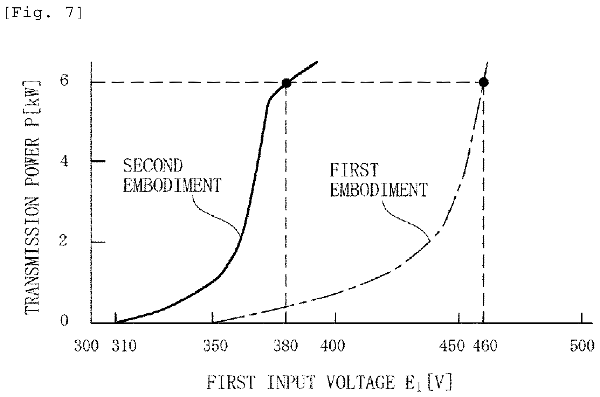

FIG. 7 shows the relationship between the first input voltage E₁ and transmission power P from the first electrical power supply unit 201 to the second electrical power supply unit 204 during the forward power transmission. For the sake of comparison, FIG. 7 also shows the relationship between the first input voltage E₁ and the transmission power P in the first embodiment shown in FIG. 2. As in the first embodiment, the first output voltage E₂ is constant at 350V.

In FIG. 7, the electrostatic capacitance ratio between the first resonant capacitor C₁ and the second resonant capacitor C₂ is 1 : 1, and the electrostatic capacitance ratio between the second resonant capacitor C₂ and the second changeover capacitor C₂' is 5 : 1. For example, the resonant capacitor of the first electrical power supply unit 201 has an electrostatic capacitance of 0.15 µF, and the resonant capacitor of the second electrical power supply unit 204 has an electrostatic capacitance of 0.18 µF. Note that in the first embodiment, the electrostatic capacitance of the resonant capacitor is 0.15 µF for both the first electrical power supply unit 101 and the second electrical power supply unit 104.

As can be appreciated from FIG. 7, in the second example, when the first input voltage E₁ is changed by 70V from 310V to 380V, the transmission power P changes from 0 kW to 6 kW. Therefore, the wireless electrical power supply apparatus 200 according to the second embodiment can control the output power (transmission power P) using a smaller voltage difference than in the first embodiment. Moreover, the wireless electrical power supply apparatus 200 can set the voltage (first input voltage E₁) required for obtaining desired output power lower than in the first example.

In a variant, in addition to or in place of the series circuit consisting of the first changeover capacitor C₁' and the first changeover switch S₁, the first electrical power supply unit 201 may include a parallel circuit consisting of a third changeover capacitor and a third changeover switch. The parallel circuit is connected in series to the first resonant capacitor C₁. The third changeover switch, under control of the first control circuit 213, is turned off during the forward power transmission and turned on during the reverse power transmission.

In addition to or in place of the series circuit consisting of the second changeover capacitor C₂' and the second changeover switch S₂, the second electrical power supply unit 204 may include a parallel circuit consisting of a fourth changeover capacitor and a fourth changeover switch. The parallel circuit is connected in series to the second resonant capacitor C₂. The fourth changeover switch, under control of the second control circuit 223, is turned on during the forward power transmission and turned off during the reverse power transmission.

Furthermore, the changeover capacitor can have a higher electrostatic capacitance than the first resonant capacitor C₁ or the second resonant capacitor C₂. For example, the electrostatic capacitance ratio between the first resonant capacitor C₁ and the second resonant capacitor C₂ can be set to 1 : 1, the electrostatic capacitance ratio between the first resonant capacitor C₁ and the first changeover capacitor C₁' can be set to 1 : 5, and the electrostatic capacitance ratio between the second resonant capacitor C₂ and the second changeover capacitor C₂' can be set to 1 : 5. When the first resonant capacitor C₁ and the second resonant capacitor C₂ have an electrostatic capacitance of 0.18 µF, the first changeover capacitor C₁' and the second changeover capacitor C₂' have an electrostatic capacitance of 0.9 µF.

Therefore, in the wireless electrical power supply apparatus 200 according to the present example, the resonant capacitor on the receiver side is increased in electrostatic capacitance relative to the resonant capacitor on the transmitter side, thereby making the constants of the resonant circuit different between the transmitter side and the receiver side, with the result that output power can be controlled using a smaller voltage difference than in the first example. Note that in the present example, the resonant coils have the same constant, and the changeover capacitors cause the resonant capacitors to have different constants, but the resonant capacitors may have the same constant, and the resonant coils may have different constants.

### [Third Embodiment]

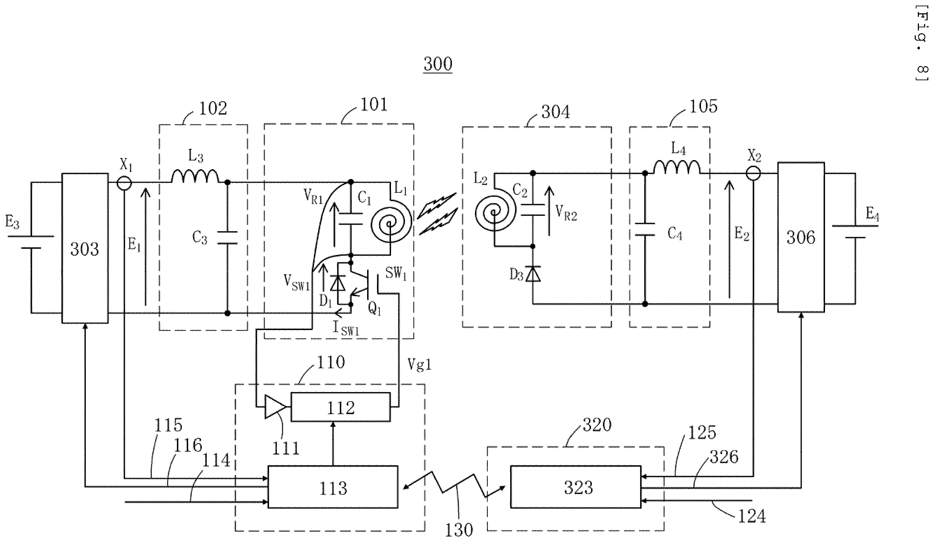

FIG. 8 illustrates a wireless electrical power supply apparatus 300 according to a third embodiment of the present invention. The wireless electrical power supply apparatus 300 performs power transmission only from the primary side to the secondary side (forward power transmission) but not from the secondary side to the primary side (reverse power transmission).

The wireless electrical power supply apparatus 300 has the same components as those in the first example, except a first DC voltage conversion portion 303, a second electrical power supply unit 304, a second DC voltage conversion portion 306, and a second control portion 320.

The first DC voltage conversion portion 303 is a unidirectional DC/DC converter. The first DC voltage conversion portion 303 simply performs a unidirectional voltage conversion operation for increasing or decreasing an input DC voltage to the first power source E₃ and outputting the DC voltage to the first filter circuit 102.

The second electrical power supply unit 304 includes a second transmission coil L₂, a second resonant capacitor C₂, and a third diode D₃. The second resonant capacitor C₂ is connected at a first terminal to a first terminal of the second transmission coil L₂ and at a second terminal to a second terminal of the second transmission coil L₂. The third diode D₃ is connected at an anode to a low-potential terminal of the second filter circuit 105 and at a cathode to the second terminal of the second resonant capacitor C₂. That is, the second electrical power supply unit 304 includes the third diode D₃ in place of the first switching device SW₁ in the first example.

The second DC voltage conversion portion 306 is a unidirectional DC/DC converter. The second DC voltage conversion portion 306 simply performs a unidirectional voltage conversion operation for increasing or decreasing an input DC voltage to the second filter circuit 105 and outputting the DC voltage to the second power source E₄.

The second control portion 320 includes a second control circuit 323 but does not include the second resonant voltage sensing circuit 121 and the second synchronization circuit 122 as included in the first embodiment. The second control circuit 323 outputs a second control signal 326 to control the second DC voltage conversion portion 306. This is not intended to control the difference between input and output voltages as is done in the first and second embodiments, but to control power reception to supply desired power to the second power source E₄. The second DC voltage conversion portion 306 can be omitted unless the input voltage E₂ is required to be converted to an input voltage to the second power source E₄.

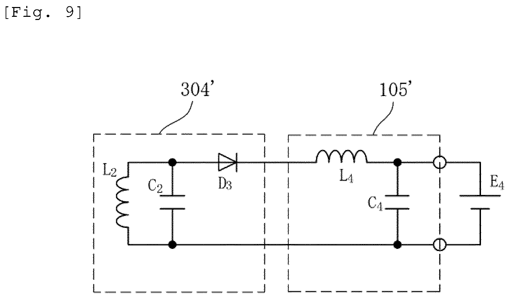

The second electrical power supply unit 304 and the second filter circuit 105 in the present embodiment can be replaced with a second electrical power supply unit 304' and a second filter circuit 105' as shown in FIG. 9. Specifically, the third diode D₃ may be connected at the anode to the first terminal of the second resonant capacitor C₂ and at the cathode to a high-potential terminal of the second filter circuit 105'. In such a case, the second filter circuit 105' may be additionally provided with a freewheeling diode for a choke coil. Moreover, the second capacitor C₄ may be provided in the subsequent stage to the second coil L₄. In FIG. 9, the second DC voltage conversion portion 306 is omitted.

### [First Embodiment of the Invention]

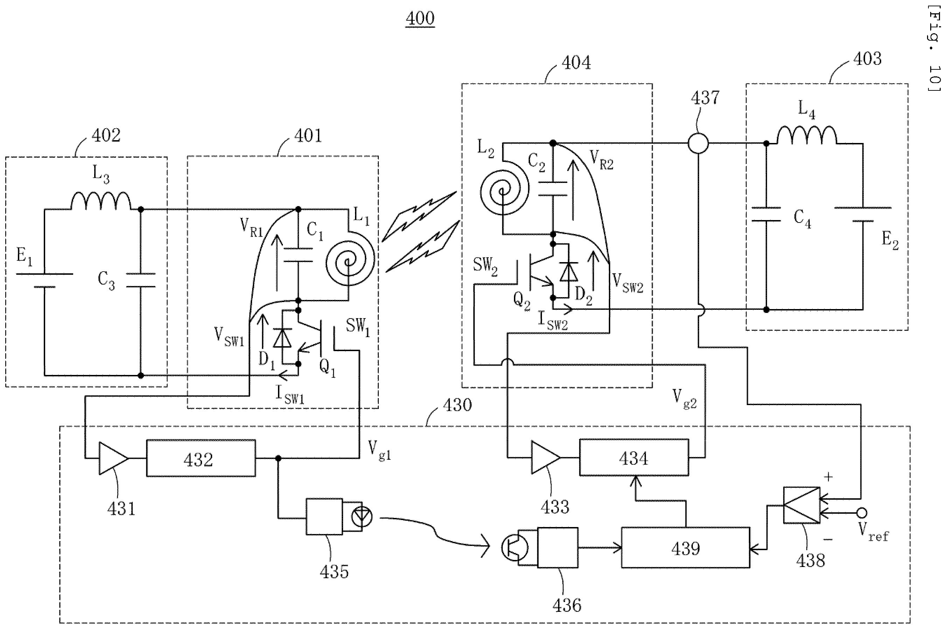

FIG. 10 illustrates a wireless electrical power supply apparatus 400 according to a fourth embodiment of the present invention. The wireless electrical power supply apparatus 400 includes a first electrical power supply unit 401 connected to a first DC power source 402, a second electrical power supply unit 404 connected to a second DC power source 403, and a control portion 430, and the first DC power source 402 and the second DC power source 403 exchange power therebetween.

The first DC power source 402 includes a first battery E₁, and a first capacitor C₃ and a first coil L₃, which collectively correspond to the first filter circuit 102. The first battery E₁ is, for example, a storage battery provided in a home. Moreover, the first battery E₁ may be a combination of the first DC voltage conversion portion 103 and the first power source E₃ in the first embodiment. The first capacitor C₃ is connected at a first terminal to a high-potential terminal of the first battery E₁ via the first coil L₃ and at a second terminal to a low-potential terminal of the first battery E₁.

The second DC power source 403 includes a second battery E₂, and a second capacitor C₄ and a second coil L₄, which collectively correspond to the second filter circuit 105. The second battery E₂ is, for example, a storage battery provided in an electricity-powered vehicle. Moreover, the second battery E₂ may be a combination of the second DC voltage conversion portion 106 and the second power source E₄ in the first embodiment. The second capacitor C₄ is connected at a first terminal to a high-potential terminal of the second battery E₂ via the second coil L₄ and at a second terminal to a low-potential terminal of the second battery E₂.

The first electrical power supply unit 401 is a single-switch converter including a first transmission coil L₁, a first switching device SW₁, which is an IGBT, and a first resonant capacitor C₁. That is, the first electrical power supply unit 401 has the same configuration as the first electrical power supply unit 101 in the first embodiment. The first transmission coil L₁ is connected at a first terminal to the high-potential terminal of the first battery E₁ via the first coil L₃ and at a second terminal to the low-potential terminal of the first battery E₁ via a current path for the first switching device SW₁. The first resonant capacitor C₁ is connected in parallel to either the first transmission coil L₁ or the first switching device SW₁, or both (in the present embodiment, the first transmission coil L₁).

The second electrical power supply unit 404 is a single-switch converter including a second transmission coil L₂, a second switching device SW₂, which is an IGBT, and a second resonant capacitor C₂. That is, the second electrical power supply unit 404 has the same configuration as the second electrical power supply unit 104 in the first embodiment. The second transmission coil L₂ is connected at a first terminal to the high-potential terminal of the second battery E₂ via the second coil L₄ and at a second terminal to the low-potential terminal of the second battery E₂ via a current path for the second switching device SW₂. The second resonant capacitor C₂ is connected in parallel to either the second transmission coil L₂ or the second switching device SW₂, or both (in the present embodiment, the second transmission coil L₂).

The first transmission coil L₁ and the second transmission coil L₂ are magnetically coupled with a coupling coefficient of 0.5 or less. Moreover, in the present embodiment, the first switching device SW₁ and the second switching device SW₂ are IGBTs but may be auto turn-off switching devices such as MOSFETs or bipolar transistors.

The control portion 430 includes a first turn-on control circuit (431, 432), a second turn-on control circuit (433, 434), and a cross-phase shift control circuit (435 to 439) .

The first turn-on control circuit includes a first resonant voltage sensing circuit 431 and a first synchronization circuit 432. The first resonant voltage sensing circuit 431 is configured to measure an end-to-end voltage V_{R1} of the first transmission coil L₁ (or the first resonant capacitor C₁) and thereby detect a first resonant voltage induced by the first transmission coil L₁ and the first resonant capacitor C₁. The first synchronization circuit 432 is configured to control turn-on of the first switching device SW₁ in synchronization with the first resonant voltage, such that the first switching device SW₁ performs a zero-voltage switching operation.

The second turn-on control circuit includes a second resonant voltage sensing circuit 433 and a second synchronization circuit 434. The second resonant voltage sensing circuit 433 is configured to measure an end-to-end voltage V_{R2} of the second transmission coil L₂ (or the second resonant capacitor C₂) and thereby detect a second resonant voltage induced by the second transmission coil L₂ and the second resonant capacitor C₂. The second synchronization circuit 434 is configured to control turn-on of the second switching device SW₂ in synchronization with the second resonant voltage, such that the second switching device SW₂ performs a zero-voltage switching operation.

The cross-phase shift control circuit includes a timing signal transmission circuit 435, a timing signal reception circuit 436, a sensing circuit 437, a comparison circuit 438, a turn-off phase difference control circuit 439.

The timing signal transmission circuit 435 is configured to transmit a timing signal for switching the first switching device SW₁, either optically or via radio. The timing signal reception circuit 436 is configured to receive the timing signal transmitted by the timing signal transmission circuit. In the present embodiment, the timing signal transmission circuit 435 includes a light-emitting diode, and the timing signal reception circuit 436 includes a phototransistor.

The sensing circuit 437 is configured to detect a current flowing between the second electrical power supply unit 404 and the second DC power source 403 and output a signal (e.g., a voltage signal) to the comparison circuit 438 in accordance with the detection result.

The comparison circuit 438 is configured to output a phase difference control instruction value such that transmission power between the first transmission coil L₁ and the second transmission coil L₂ is set to a predetermined target value. The comparison circuit 438 includes, for example, a differential amplifier whose inverting input terminal receives a reference voltage V_{ref} in accordance with a target transmission power value and whose non-inverting input terminal receives a signal from the sensing circuit 437. In accordance with the difference between the two, the comparison circuit 438 outputs a signal to the turn-off phase difference control circuit 439 as a phase difference control instruction value.

The turn-off phase difference control circuit 439 outputs a control signal (for phase shift control) to the second synchronization circuit 434 on the basis of outputs from the timing signal reception circuit 436 and the comparison circuit 438, so as to cause a predetermined phase difference between turn-off of the first switching device SW₁ and turn-off of the second switching device SW₂. The second synchronization circuit 434 turns off the second switching device SW₂ in accordance with the control signal.

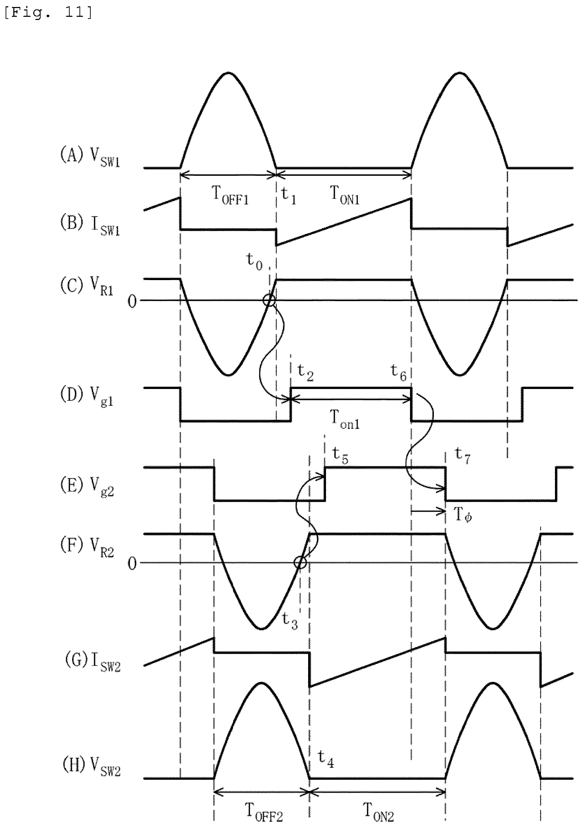

Next, control by the wireless electrical power supply apparatus 400 will be described with reference to FIG. 11. FIG. 11 provides waveforms of: (A) an end-to-end voltage V_{SW1} of the first switching device SW₁; (B) a current I_{SW1} flowing through the first switching device SW₁; (C) an end-to-end voltage V_{R1} of the first transmission coil L₁; (D) a gate voltage V_{g1} of the first switching device SW₁; (E) a gate voltage V_{g2} of the second switching device SW₂; (F) an end-to-end voltage V_{R2} of the second transmission coil L₂; (G) a current I_{SW2} flowing through the second switching device SW₂; and (H) an end-to-end voltage V_{SW2} of the second switching device SW₂.

During the period T_{OFF1} in which the first switching device SW₁ is OFF, the end-to-end voltage V_{R1} of the first transmission coil L₁ occurs resulting from a first resonant voltage being induced by the first transmission coil L₁ and the first resonant capacitor C₁.

The end-to-end voltage V_{SW1} of the first switching device SW₁ gently rises and falls to zero along a resonance curve. Once the voltage V_{SW1} reaches zero at time t₁, a first anti-parallel diode D₁ included in the first switching device SW₁ automatically becomes conductive, with the result that the first switching device SW₁ is rendered conductive.

Once the first resonant voltage sensing circuit 431 detects a zero cross point t₀ where the voltage V_{R1} crosses zero, the first synchronization circuit 432 connected to the first resonant voltage sensing circuit 431 changes the gate voltage V_{g1} of the first switching device SW₁ from low to high and thereby renders the first transistor Q₁ included in the first switching device SW₁ conductive at time t₂ in synchronization with the zero cross point t₀ of the first resonant voltage. That is, the first synchronization circuit 432 turns on the first switching device SW₁ so that the first switching device SW₁ performs a zero-voltage switching operation.

Here, the end-to-end voltage V_{SW1} of the first switching device SW₁ might have a small amplitude and hence might not reach zero depending on the state of a load (e.g., the first DC power source 402), but the waveform of the end-to-end voltage V_{R1} of the first transmission coil L₁ crosses zero regardless of the size of the amplitude. Accordingly, in the present embodiment, the first resonant voltage sensing circuit 431 is configured to detect the zero cross point t₀.

Furthermore, to achieve the zero-voltage switching operation of the first switching device SW₁, the first switching device SW₁ may be turned on at time t₁, but the timing of the turn-on might deviate from time t₁ depending on the load. Accordingly, in the present embodiment, the first switching device SW₁ is turned on at time t₂ later than time t₁ in order to allow a slight leeway.

During the period T_{ON1} in which the first switching device SW₁ is conductive, a DC voltage of the first battery E₁ is applied to the first transmission coil L₁, and therefore the current I_{SW1} flowing through the first switching device SW₁ is linearly increased. Once the current I_{SW1} changes from negative to positive, the current flowing through the first anti-parallel diode D₁ smoothly flows through the first transistor Q₁, with the result that the first switching device SW₁ continues to be conductive.

The first synchronization circuit 432 changes the gate voltage V_{g1} of the switching device SW₁ from high to low at time t₆ after a lapse of the preset period T_{ON1}, thereby shutting off the first transistor Q₁. As a result, the first switching device SW₁ is turned off, the current that is stored on the first transmission coil L₁ flows into the first resonant capacitor C₁, which causes a resonance state and continue to oscillate.

During the period T_{OFF2} in which the second switching device SW₂ is OFF, the end-to-end voltage V_{R2} of the second transmission coil L₂ occurs resulting from a second resonant voltage being induced by the second transmission coil L₂ and the second resonant capacitor C₂.

The end-to-end voltage V_{SW2} of the second switching device SW₂ gently rises and falls to zero along a resonance curve. Once the voltage V_{SW2} reaches zero at time t₄, a second anti-parallel diode D₂ included in the second switching device SW₂ automatically becomes conductive, with the result that the second switching device SW₂ is rendered conductive.

Once the second resonant voltage sensing circuit 433 detects a zero cross point t₃ where the voltage V_{R2} crosses zero, the second synchronization circuit 434 connected to the second resonant voltage sensing circuit 433 changes the gate voltage V_{g2} of the second switching device SW₂ from low to high and thereby renders the second transistor Q₂ included in the second switching device SW₂ conductive at time t₅ in synchronization with the zero cross point t₃ of the second resonant voltage. That is, the second synchronization circuit 434 turns on the second switching device SW₂ so that the second switching device SW₂ performs a zero-voltage switching operation.

During the period T_{ON2} in which the second switching device SW₂ is conductive, a DC voltage of the second battery E₂ is applied to the second transmission coil L₂, and therefore the current I_{SW2} flowing through the second switching device SW₂ is linearly increased. Once the current I_{SW2} changes from negative to positive, the current flowing through the second anti-parallel diode D₂ smoothly flows through the second transistor Q₂, with the result that the second switching device SW₂ continues to be conductive.

Once the gate voltage V_{g1} of the first switching device SW₁ transitions from high to low at time t₆, the first switching device SW₁ is turned off, and the timing signal transmission circuit 435 sends a timing signal to the timing signal reception circuit 436.

The turn-off phase difference control circuit 439 connected to the timing signal reception circuit 436 outputs a control signal to the second synchronization circuit 434 such that the second synchronization circuit 434 changes the gate voltage V_{g2} of the second switching device SW₂ from high to low and thereby turn off the second switching device SW₂ at time t₇ later than time t₆ by a phase shift time T_{ϕ}. Once the second switching device SW₂ is turned off, the current that is stored on the second transmission coil L₂ flows into the second resonant capacitor C₂, which causes a resonance state and continue to oscillate.

In the present embodiment, the operation as above renders it possible to shift the turn-off phase of the second switching device SW₂ by time T_{ϕ} (or by a phase angle ϕ = 2πT_{ϕ} / Tₒ (Tₒ: operation cycle)) from the turn-off phase of the first switching device SW₁ while allowing the first switching device SW₁ and the second switching device SW₂ to maintain low-loss zero-voltage switching.

In the wireless electrical power supply apparatus 400 according to the present embodiment, the first electrical power supply unit 401 is a single-switch converter actuated by the first switching device SW₁, and the second electrical power supply unit 404 is a single-switch converter actuated by the second switching device SW₂. In the case of an electric car, the power semiconductor device that is used as the first switching device SW₁ is relatively expensive because of requirements for high-speed switching performance of about 90 kHz and low loss and high withstand voltage characteristics. Moreover, the power semiconductor device is normally required to have cooling fins, and therefore providing a plurality of power semiconductor devices requires some space for accommodating the power semiconductor devices. Further, the lower the number of switching devices to be controlled is, the more readily the circuit that controls the timing of switching the switching devices can perform such control; in the case where the wireless electrical power supply apparatus is of a bridge converter type using a plurality of power semiconductors, accurate dead-time control is required for avoiding a malfunction due to two serially connected switching devices in an arm being turned on at the same time. On the other hand, when compared to such a wireless electrical power supply apparatus of a bridge converter type, the wireless electrical power supply apparatus 400 according to the present embodiment can be reduced in cost and size.

Furthermore, in the wireless electrical power supply apparatus 400 according to the present embodiment, the turn-off phase difference control circuit 439 performs phase shift control to compensate for a phase difference in transmission power between the first electrical power supply unit 401 and the second electrical power supply unit 404, which is a major cause of variations of circuit constants and hence changes in transmission power, with the result that such changes in transmission power are reduced to a minimum, thereby ensuring sufficient mass productivity and sufficient compatibility. Thus, the present embodiment renders it possible to enhance the stability of transmission characteristics.

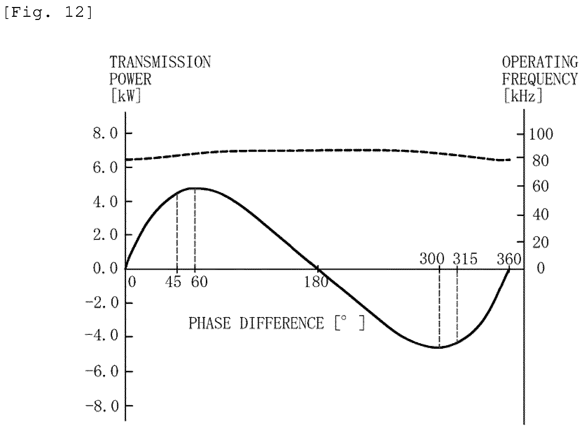

FIG. 12 shows the relationship among phase difference, transmission power, and operating frequency for the wireless electrical power supply apparatus 400. The bold line represents transmission power (left axis), and the broken line represents operating frequency (right axis). As can be appreciated from the figure, the present embodiment renders it possible to control transmission power to range from 0 to the maximum value (in FIG. 12, 4.8 kW) while keeping the operating frequency approximately constant. Thus, the present embodiment renders it possible to enhance the ability to control transmission power.

Furthermore, as can be appreciated from FIG. 12, phase shift control can be performed bidirectionally over the entire range of transmission power, and transmission power gently changes relative to a range of phase differences of from 45 degrees to 315 degrees and therefore can be readily and stably controlled over that range. In particular, in the case of instantaneous control, as in the present embodiment, where the second switching device SW₂ is turned off with a delay of time T_{ϕ} after the first switching device SW₁ is sensed to be turned off, control is not feasible for an area around a phase difference of zero degrees and an area of negative phase differences but can be stably performed over the entire range of phase differences of from 45 degrees to 315 degrees (i.e., the entire range of transmission power). Further, from the viewpoint of stable control at desired operation points, it is preferable to perform phase shift control over the range of phase differences of from 60 degrees to 300 degrees.

### Further Embodiment]

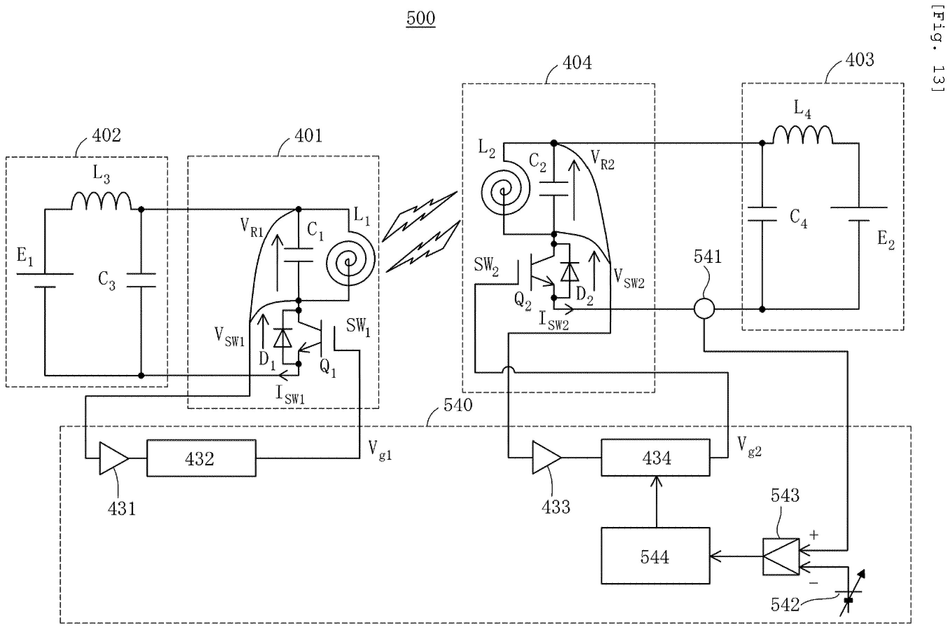

FIG. 13 illustrates a wireless electrical power supply apparatus 500 according to a further embodiment of the present invention. The wireless electrical power supply apparatus 500 includes a first electrical power supply unit 401 connected to a first DC power source 402, a second electrical power supply unit 404 connected to a second DC power source 403, and a control portion 540, and the first DC power source 402 and the second DC power source 403 exchange power therebetween.

The first DC power source 402, the first electrical power supply unit 401, the second DC power source 403, and the second electrical power supply unit 404 are configured in the same manner as in the fourth embodiment and therefore will not be elaborated upon herein.

The control portion 540 includes a first turn-on control circuit (431, 432), a second turn-on control circuit (433, 434), and a cross-phase shift control circuit (541 to 544). The first turn-on control circuit (431, 432) and the second turn-on control circuit (433, 434) are the same as those in the first embodiment.

The first turn-on control circuit includes a first resonant voltage sensing circuit 431 and a first synchronization circuit 432. The first resonant voltage sensing circuit 431 is configured to measure an end-to-end voltage V_{R1} of the first transmission coil L₁ and thereby detect a first resonant voltage induced by the first transmission coil L₁ and the first resonant capacitor C₁. The first synchronization circuit 432 is configured to control turn-on of the first switching device SW₁ in synchronization with the first resonant voltage such that the first switching device SW₁ performs a zero-voltage switching operation, and also configured to maintain a given preset conductive time T_{ON1}.

The second turn-on control circuit includes a second resonant voltage sensing circuit 433 and a second synchronization circuit 434. The second resonant voltage sensing circuit 433 is configured to measure an end-to-end voltage V_{R2} of the second transmission coil L₂ and thereby detect a second resonant voltage induced by the second transmission coil L₂ and the second resonant capacitor C₂. The second synchronization circuit 434 is configured to control turn-on of the second switching device SW₂ in synchronization with the second resonant voltage such that the second switching device SW₂ performs a zero-voltage switching operation.

The cross-phase shift control circuit includes a phase difference detector 541, a phase difference instruction circuit 542, a differential amplifier 543 (corresponding to the "feedback control portion" of the present invention), and a conductive-time-variable portion 544.

The phase difference detector 541 is configured to detect transmission power between the first transmission coil L₁ and the second transmission coil L₂ and thereby indirectly detect a phase difference. There is a correlation between the transmission power and the phase difference (see FIG. 12), and therefore the phase difference can be indirectly detected and controlled by detecting and controlling the transmission power. Note that instead of using the phase difference detector 541, a phase difference detector configured to directly detect a phase difference may be used.

The phase difference instruction circuit 542 is configured to indicate a target value for transmission power between the first transmission coil L₁ and the second transmission coil L₂ and thereby indirectly indicate a target phase difference value. Note that instead of using the phase difference instruction circuit 542, a phase difference instruction circuit configured to directly indicate a target phase difference value may be used.

The differential amplifier 543 is configured to compare a detection value obtained by the phase difference detector 541 with a target value indicated by the phase difference instruction circuit 542 and perform phase difference feedback control. In the present embodiment, the detection value and the target value are inputted to a non-inverting input terminal and an inverting input terminal, respectively, of the differential amplifier 543. The differential amplifier 543 outputs a signal corresponding to the difference between these two values to the conductive-time-variable portion 544 as a phase difference control instruction value.

In accordance with the signal received from the differential amplifier 543, the conductive-time-variable portion 544 controls the second synchronization circuit 434 to change a period of time during which to render the second switching device SW₂ conductive. Specifically, the conductive-time-variable portion 544 outputs a control signal to the second synchronization circuit 434 so as to cause a predetermined phase difference between turn-off of the first switching device SW₁ and turn-off of the second switching device SW₂ (phase shift control). In accordance with the control signal, the second synchronization circuit 434 turns off the second switching device SW₂.

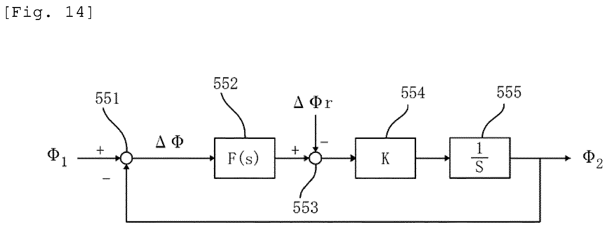

FIG. 14 is a diagram showing an operation principle of the wireless electrical power supply apparatus 500. The wireless electrical power supply apparatus 500 can be represented by a first arithmetic portion 551, a filter portion 552, a second arithmetic portion 553, a gain setting portion 554, and a voltage-controlled oscillation portion 555.

The first arithmetic portion 551 represents the phase difference detector 541 and calculates a phase difference ΔΦ between a phase Φ₁ for the first electrical power supply unit 401 and a phase Φ₂ for the second electrical power supply unit 404 on the basis of transmission power. The phase difference ΔΦ between the phase Φ₁ for the first electrical power supply unit 401 and the phase Φ₂ for the second electrical power supply unit 404 may be calculated on the basis of factors other than transmission power. The filter portion 552, which is represented as a transfer function F(S), is a low-pass filter for system stabilization included in the phase difference detector 541.

The second arithmetic portion 553 calculates a difference between an output of the filter portion 552 and a phase difference instruction ΔΦᵣ. The second arithmetic portion 553 represents the differential amplifier 543, and the phase difference instruction ΔΦᵣ indicates a target phase difference value outputted by the phase difference instruction circuit 542. The gain setting portion 554, which is represented as a block with a K, is an aggregated gain of an entire control loop.

The voltage-controlled oscillation portion 555, which is represented as a block with 1/S, is an aggregation of the conductive-time-variable portion 544, the second synchronization circuit 434, and the second electrical power supply unit 404. The voltage-controlled oscillation portion 555 functions as a voltage-controlled oscillator whose operating frequency changes as a result of a change in conductive time of the second switching device SW₂, and therefore also functions as an integrator for operating phases.

From FIG. 14, the phase Φ₂ for the second electrical power supply unit 404 can be expressed by the following equation. ${Φ}_{2} = \frac{KF \left(s\right)}{S + KF \left(s\right)} {Φ}_{1} - \frac{K}{S + KF \left(s\right)} ΔΦ$

As can be appreciated from equation (1), the wireless electrical power supply apparatus 500 operates such that the phase difference ΔΦ between the phase Φ₂ for the second electrical power supply unit 404 and the phase Φ₁ for the first electrical power supply unit 401 is steadily equal to the phase difference instruction ΔΦᵣ (i.e., the target phase difference value).

Unlike in the fourth embodiment, the wireless electrical power supply apparatus 500 according to the present embodiment does not perform instantaneous control and therefore responds with a delay, but the wireless electrical power supply apparatus 500 eliminates the need for the timing signal transmission circuit 435 and the timing signal reception circuit 436 in the fourth embodiment and therefore is low-cost and resistant to disturbance noise.

### Further variant

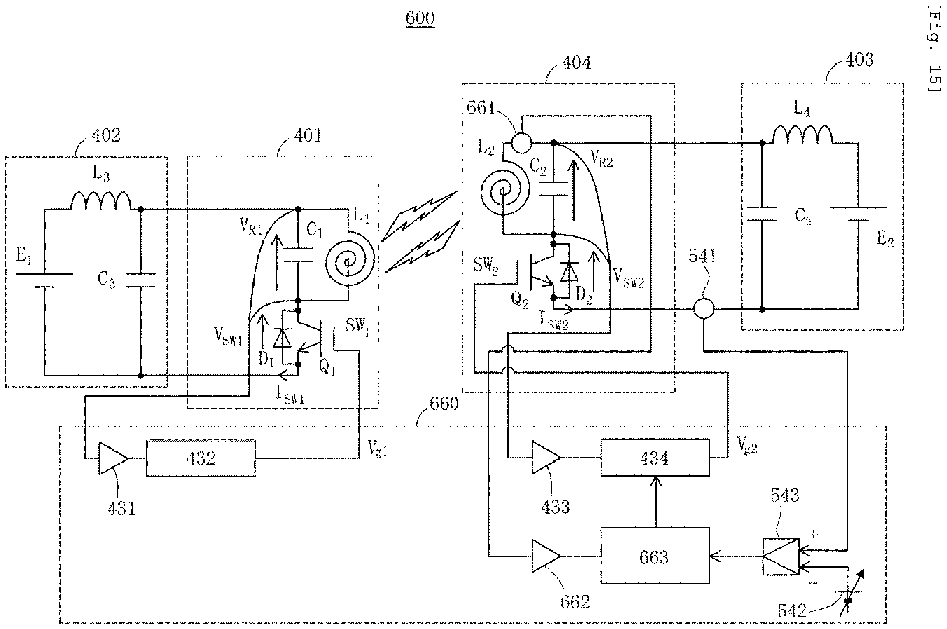

FIG. 15 illustrates a wireless electrical power supply apparatus 600 according to a further variant of a wireless electrical power supply apparatus.

The wireless electrical power supply apparatus 600 includes a first electrical power supply unit 401 connected to a first DC power source 402, a second electrical power supply unit 404 connected to a second DC power source 403, and a control portion 660, and the first DC power source 402 and the second DC power source 403 exchange power therebetween.

The first DC power source 402, the first electrical power supply unit 401, the second DC power source 403, and the second electrical power supply unit 404 are configured in the same manner as in the further embodiment and therefore will not be elaborated upon herein.

The control portion 660 includes a first turn-on control circuit (431, 432), a second turn-on control circuit (433, 434), and a cross-phase shift control circuit (541 to 543, 661 to 663). The first turn-on control circuit (431, 432) and the second turn-on control circuit (433, 434) are configured in the same manner as in the further embodiment.

The cross-phase shift control circuit includes a phase difference detector 541, a phase difference instruction circuit 542, a differential amplifier 543, a resonant current sensing element 661, a resonant current sensing circuit 662, and a conductive-time-variable portion 663. The phase difference detector 541, the phase difference instruction circuit 542, and the differential amplifier 543 are configured in the same manner as in the further embodiment.

The resonant current sensing element 661 and the resonant current sensing circuit 662 collectively correspond to the "resonant current sensor" of the present invention. The resonant current sensing element 661 detects a current flowing through the second transmission coil L₂ and outputs a detection result to the resonant current sensing circuit 662. Based on the detection result from the resonant current sensing element 661, the resonant current sensing circuit 662 detects a zero cross point of the current flowing through the second transmission coil L₂ and outputs a detection result (zero cross signal) to the conductive-time-variable portion 663.

At least during the period in which the second switching device SW₂ is conductive, the current flowing through the second transmission coil L₂ is equal to a current I_{SW2} flowing through the second switching device SW₂. Accordingly, detecting the zero cross point of the current flowing through the second transmission coil L₂ is the same as detecting a zero cross point of the current I_{SW2} across the second switching device SW₂.

In the second switching device SW₂, when the current I_{SW2} reaches the zero cross point, the second anti-parallel diode D₂ is turned off, so that the current flowing to the second anti-parallel diode D₂ is diverted to the second transistor Q₂. That is, the zero cross point of the current I_{SW2} coincides with the time at which the second anti-parallel diode D₂ is turned off. Note that the second anti-parallel diode D₂ is an internal (parasitic) diode of the second transistor Q₂ or a diode independent of the second transistor Q2.

The conductive-time-variable portion 663 is configured to control an on-time of the second transistor Q₂ that follows turn-off of the second anti-parallel diode D₂. The conductive-time-variable portion 663 receives a zero cross signal from the resonant current sensing circuit 662 and an input signal concerning a phase difference control instruction value (more specifically, a control instruction value for transmission power correlated with a phase difference) from the differential amplifier 543. The control instruction value is intended to cause a detection value obtained by the phase difference detector 541 to approach a target value indicated by the phase difference instruction circuit 542 (for the purpose of feedback control).

Based on these signals, the conductive-time-variable portion 663 calculates an on-time of the second transistor Q₂ that follows turn-off of the second anti-parallel diode D₂. Moreover, the conductive-time-variable portion 663 generates a timing signal for turning off the second transistor Q₂ after a lapse of the on-time. The timing signal is outputted to the second synchronization circuit 434.

In accordance with the timing signal, the second synchronization circuit 434 turns off the second transistor Q₂. As a result, phase shift control is performed to cause a predetermined phase difference between turn-off of the first switching device SW₁ and turn-off of the second switching device SW₂.

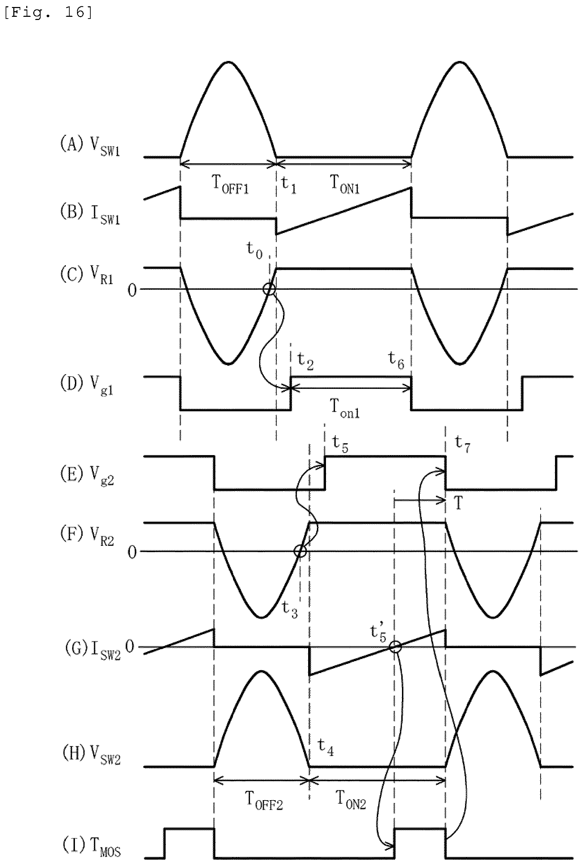

FIG. 16 shows a timing chart for components of the wireless electrical power supply apparatus 600. In FIG. 16, waveforms (A) to (H) represent the same signals as those shown in FIG. 11, and waveform (I) represents a timing signal T_{MOS} for controlling an on-time of the second transistor Q₂.

Once the voltage V_{SW2} reaches zero at time t₄, the second anti-parallel diode D₂ of the second switching device SW₂ is turned on, with the result that the second switching device SW₂ is rendered conductive. During the period T_{ON2} in which the second switching device SW₂ is conductive, the current I_{SW2} across the second switching device SW₂ is linearly increased.

Once the current I_{SW2} reaches zero at time t₅', the second anti-parallel diode D₂ is turned off, with the result that the current flowing to the second anti-parallel diode D₂ is diverted to the second transistor Q₂. In the control portion 660, the resonant current sensing circuit 662 outputs a zero cross signal to the conductive-time-variable portion 663.

The conductive-time-variable portion 663 calculates an on-time T of the second transistor Q₂ that follows the turn-off of the second anti-parallel diode D₂, on the basis of the zero cross signal and an input signal from the differential amplifier 543 concerning a control instruction value, and generates a timing signal T_{MOS} concerning the on-time T. The conductive-time-variable portion 663 outputs the generated timing signal T_{MOS} to the second synchronization circuit 434.

The second synchronization circuit 434 turns off the second transistor Q₂ at time t₇ by changing the gate voltage V_{g2} of the second transistor Q₂ from high to low simultaneously with the timing signal T_{MOS} changing from high to low. The rest of the control is the same as in FIG. 11.

As in the further embodiment, the wireless electrical power supply apparatus 600 according to the present embodiment eliminates the need for the timing signal transmission circuit 435 and the timing signal reception circuit 436 and therefore is low-cost and resistant to disturbance noise.

Furthermore, the wireless electrical power supply apparatus 600 according to the present embodiment controls the on-time of the second transistor Q₂ that follows the turn-off of the second anti-parallel diode D₂, and therefore can stably control the second electrical power supply unit 404 compared to a normal method that controls the on-time (conductive time) of the second switching device SW₂.

In the method that controls the on-time of the second switching device SW₂, the sum of the on-time of the second anti-parallel diode D₂ and the on-time of the second transistor Q₂ is controlled. In this case, for one sum, there is more than one combination of the on-time of the second anti-parallel diode D₂ and the on-time of the second transistor Q₂, and therefore the on-time of the second transistor Q₂ cannot be uniquely determined.

For example, even when the conductive-time-variable portion 663 calculates the on-time of the second switching device SW₂, and the second switching device SW₂ is turned off in accordance with that on-time, if the on-time of the second transistor Q₂ is out of an appropriate range, the second electrical power supply unit 404 operates unstably. When the second electrical power supply unit 404 operates unstably, the phase difference between the first electrical power supply unit 401 and the second electrical power supply unit 404 fluctuates, resulting in an excess voltage or current applied to the second switching device SW₂.

On the other hand, in the present embodiment, the conductive-time-variable portion 663 calculates the on-time T of the second transistor Q₂ that follows the turn-off of the second anti-parallel diode D₂, and therefore the on-time T can be uniquely determined. Accordingly, in the present embodiment, the on-time T of the second transistor Q₂ can be maintained within an appropriate range in accordance with a target phase difference value (or a target transmission power value), so that the second electrical power supply unit 404 can be stably controlled.

### [Variants]

While some embodiments of the wireless electrical power supply apparatus according to the present invention have been described above, the present invention is not limited to the embodiments.

In the first through third examples, the first filter circuit 102 and the second filter circuit 105 can be omitted. However, providing the first filter circuit 102 and the second filter circuit 105 renders it possible to stabilize input and output voltages. Moreover, the first DC voltage conversion portion 103 or 303 may be integrated with the bidirectional AC/DC converter serving as the first power source E₃.

In the first and second examples the second DC voltage conversion portion 106 can be omitted or configured as a unidirectional DC/DC converter. In either case, during the forward power transmission, the first control circuit 113 or 213 may perform the same control as in the first and second embodiments, and during the reverse power transmission, the first control circuit 113 or 213 may control the second voltage difference by controlling the first DC voltage conversion portion 103 to change the second output voltage E₁ (e.g., adjust the second output voltage E₁ to be lower or higher than the second input voltage E₂).

In the first through third examples, the on-time of the first switching device SW₁ may be controlled within a tolerable cycle range during the forward power transmission. Moreover, in the first and second examples, the on-time of the second switching device SW₂ may also be controlled within a tolerable cycle range during the reverse power transmission. For example, when the input voltage can only be controlled within a limited range, there is some difficulty in setting the value of output power to a predetermined target power value, but even in such a case, the value of output power can still be set to the predetermined target power value by changing the on-time of the switching device on the transmitter side within the tolerable cycle range without changing the input voltage. Note that the tolerable cycle range can be suitably set, for example, based on a reference frequency range defined by international standards or suchlike. Moreover, the range within which the on-time can be changed may include a 0% duty cycle for an inactive state.

For example, when the value of the first output voltage E₂ is low during the forward power transmission, and desired output power cannot be obtained even by reducing the output (i.e., the first input voltage E₁) of the first DC voltage conversion portion 103 to the lower limit of the control range, output power higher than a target power value is provided. In such a case, the on-time of the first switching device SW₁ is set shorter than the original setting value within the tolerable cycle range, thereby decreasing the current I_{L1} flowing to the first transmission coil L₁. Consequently, the current I_{L2} flowing to the second transmission coil L₂ is decreased as well, resulting in reduced transmission power and hence desired output power.

In the first through third examples, when the first transmission coil L₁ and the second transmission coil L₂ are apart at a distance shorter than a prescribed distance (e.g., 45 mm), power transmission may be restricted. Restricting power transmission renders it possible to avoid unstable operations due to the first transmission coil L₁ and the second transmission coil L₂ being positioned excessively close to each other (in other words, unstable operations caused by no resonant voltage being generated due to lack of leakage inductance).

When power transmission is restricted, unstable operations due to the first transmission coil L₁ and the second transmission coil L₂ being positioned excessively close to each other may be detected, and distance measuring means for measuring the distance between the first transmission coil L₁ and the second transmission coil L₂ may be provided (e.g., coils for distance measurement may be provided on the primary and secondary sides). Moreover, the first control instruction 114 and/or the second control instruction 124 may include information about the distance between the first transmission coil L₁ and the second transmission coil L₂.

For example, when the first transmission coil L₁ and the second transmission coil L₂ are apart at a distance shorter than a prescribed distance, if desired output power is not obtained during the forward power transmission even by reducing the first input voltage E₁ to the lower limit of the control range, the first control circuit 113 or 213 may stop controlling the first DC voltage conversion portion 103 and thereby stop power transmission. Moreover, instead of stopping power transmission, the first control circuit 113 or 213 may set the on-time of the first switching device SW₁ shorter than a predetermined value within the tolerable cycle range. This results in reduced transmission power and hence desired output power.

In the first embodiment, the timing signal transmission circuit 435 and the timing signal reception circuit 436 may be omitted. Instead of using the timing signal transmission circuit 435 and the timing signal reception circuit 436, a sensing element configured to sense a change in voltage of the first transmission coil L₁ by contactless magnetic or electric field sensing may be used. To keep the sensing element from being affected by noise, the sensing element is preferably positioned in the center of the second transmission coil L₂ where there is no winding.

In the first embodiment, the conductive time T_{ON1} of the first switching device SW₁ is set at a fixed value, but in a variant outside the scope of the appended claims, alternatively a conductive time control circuit for the first switching device SW₁ may be provided so as to control the conductive time of the first switching device SW₁ and thereby set the operating frequency of the first electrical power supply unit 401 to a predetermined value.

In the first and second embodiments, control is performed to cause a predetermined phase difference between the turn-off of the first switching device SW₁ and the turn-off of the second switching device SW₂, but alternatively, in a variant outside the scope of the appended claims, control may be performed to cause a predetermined phase difference between the turn-on of the first switching device SW₁ and the turn-on of the second switching device SW₂. That is, control can be configured to cause a predetermined phase difference between the switching of the first switching device SW₁ and the switching of the second switching device SW₂. Note that the phase difference control for the turn-on timing needs to be performed such that each of the first and second switching devices SW₁ and SW₂ performs a zero-voltage switching operation, but there is no such requirement for the phase difference control for the turn-off timing, and hence there is a higher degree of freedom in the phase difference control for the turn-off timing. Thus, from the viewpoint of desired power transmission, control is preferably performed to cause a predetermined phase difference between the turn-off of the first switching device SW₁ and the turn-off of the second switching device SW₂.

In addition to the cross-phase shift control circuit (435 to 439) for power transmission from the first electrical power supply unit 401 to the second electrical power supply unit 404, the control portion 430 may further include a cross-phase shift control circuit for power transmission from the second electrical power supply unit 404 to the first electrical power supply unit 401.

Similarly, the control portions 540 and 660 may further include cross-phase shift control circuits for power transmission from the second electrical power supply unit 404 to the first electrical power supply unit 401.

Furthermore, the wireless electrical power supply apparatuses 400 to 600 in the several variants are configured as bidirectional wireless electrical power supply apparatuses for bidirectional power transmission between the first electrical power supply unit 401 and the second electrical power supply unit 404, but can also be used as unidirectional wireless electrical power supply apparatuses for unidirectional power transmission between the first electrical power supply unit 401 and the second electrical power supply unit 404.

### DESCRIPTION OF THE REFERENCE CHARACTERS

100, 200, 300, 400, 500, 600 wireless electrical power supply apparatus
101, 201, 401 first electrical power supply unit
102 first filter circuit
103, 303 first DC voltage conversion portion
104, 204, 304, 304', 404 second electrical power supply unit
105, 105' second filter circuit
106, 306 second DC voltage conversion portion
110, 210 first control portion
111, 431 first resonant voltage sensing circuit
112 first synchronization circuit
113, 213 first control circuit
114 first control instruction
115 first detection signal
116 first control signal
120, 220, 320 second control portion
121, 433 second resonant voltage sensing circuit
122 second synchronization circuit
123, 223, 323 second control circuit
124 second control instruction
125 second detection signal
126, 326 second control signal
130 intercommunication signal
402 first DC power source
403 second DC power source
430, 540, 660 control portion
432 first synchronization circuit
434 second synchronization circuit
435 timing signal transmission circuit
436 timing signal reception circuit
437 sensing circuit
438 comparison circuit
439 turn-off phase difference control circuit
541 phase difference detector
542 phase difference instruction circuit
543 differential amplifier
544, 663 conductive-time-variable portion
551 first arithmetic portion
552 filter portion
553 second arithmetic portion
554 gain setting portion
555 voltage-controlled oscillation portion
661 resonant current sensing element
662 resonant current sensing circuit

## Claims

1. A wireless electrical power supply apparatus (400) comprising:
a first electrical power supply unit (401) connected to a first DC power source (402);
a second electrical power supply unit (404) connected to a second DC power source (403); and
a control portion (430) configured to control the first electrical power supply unit (401) and the second electrical power supply unit (404), wherein,
the first electrical power supply unit (401) and the second electrical power supply unit (404) transmit power to each other,
the first electrical power supply unit (401) includes:
a first transmission coil (L1);
a first switching device (SW1) connected in series to the first transmission coil (L1); and
a first resonant capacitor (C1) connected in parallel to either the first transmission coil (L1) or the first switching device (SW1), or both,
the second electrical power supply unit (404) includes:
a second transmission coil (L2);
a second switching device (SW2) connected in series to the second transmission coil (L2); and
a second resonant capacitor (C2) connected in parallel to either the second transmission coil (L2) or the second switching device (SW2), or both, and
the control portion (430) includes:
a first turn-on control circuit (431, 432) configured to control turn-on of the first switching device (SW1) in synchronization with a resonant voltage induced by the first transmission coil (L1) and the first resonant capacitor (C1) such that the first switching device (SW1) performs a zero-voltage switching operation;
a second turn-on control circuit (433, 434) configured to control turn-on of the second switching device (SW2) in synchronization with a resonant voltage induced by the second transmission coil (L2) and the second resonant capacitor (C2) such that the second switching device (SW2) performs a zero-voltage switching operation; and
a cross-phase shift control circuit (435, 436, 437, 438, 439) configured to perform control to cause a predetermined phase difference between turn-off of the first switching device (SW1) and turn-off of the second switching device (SW2), wherein
the cross-phase shift control circuit (435, 436, 437, 438, 439) is configured to control a turn-off timing of the second switching device (SW2) according to a difference between a transmission power from the first electrical power supply unit (401) to the second electrical power supply unit (404) and a target power value during power transmission from the first electrical power supply unit (401) to the second electrical power supply unit (404) and to control the transmission power without changing a conductive time of the first switching device (SW1), and wherein the first electrical power supply unit (401) is a single-switch converter, and
the first switching device (SW1) includes a first transistor (Q1) connected in series to the first transmission coil (L1) and a first diode (D1) connected in anti-parallel to the first transistor (Q1), and the first switching device (SW1) is applied with a unipolar voltage during the power transmission, and
the first turn-on control circuit is configured to detect a zero cross point of a voltage at both ends of the first transmission coil (L1) or the first resonant capacitor (C1) and to turn on the first transistor (Q1) after the first diode (D1) becomes conductive.

2. The wireless electrical power supply apparatus (400) according to claim 1, wherein the cross-phase shift control circuit (435, 436, 437, 438, 439) includes:
a phase difference detector (541) configured to directly or indirectly sense the phase difference;
a phase difference instruction circuit (542) configured to directly or indirectly indicate a target value for the phase difference;
a feedback control portion (543) configured to control the phase difference by feedback control comparing a detection value from the phase difference detector (541) and the target value from the phase difference instruction circuit (542); and
a conductive-time-variable portion (544) configured to change a conductive time of the second switching device (SW2) in accordance with an output from the feedback control portion (543).

3. The wireless electrical power supply apparatus (400) according to claim 2, wherein,
the phase difference detector (541) indirectly detects the phase difference by detecting transmission power, and
the phase difference instruction circuit (542) indirectly indicates the target value by indicating transmission power.

4. The wireless electrical power supply apparatus (400) according to claim 1, wherein the cross-phase shift control circuit (435, 436, 437, 438, 439) controls the phase difference to adjust transmission power between the first transmission coil (L1) and the second transmission coil (L2) to a predetermined value.

5. The wireless electrical power supply apparatus (400) according to claim 1, wherein,
the second switching device (SW2) includes a transistor (Q2) and an anti-parallel diode (D2) connected in anti-parallel to the transistor (Q2), and
the cross-phase shift control circuit (435, 436, 437, 438, 439) includes:
a phase difference detector (541) configured to directly or indirectly sense the phase difference;
a phase difference instruction circuit (542) configured to directly or indirectly indicate a target value for the phase difference;
a feedback control portion (543) configured to control the phase difference by feedback control comparing a detection value from the phase difference detector (541) and the target value from the phase difference instruction circuit (542);
a resonant current sensor configured to detect a zero cross point of a current flowing through the second transmission coil (L2); and
a conductive-time-variable portion (544) configured to control an on-time of the transistor (Q2) that follows turn-off of the anti-parallel diode (D2), in accordance with a detection result from the resonant current sensor and an output from the feedback control portion (543).

## Patentansprüche

1. Drahtlose Stromversorgungsvorrichtung (400), umfassend:
eine erste Stromversorgungseinheit (401), die mit einer ersten Gleichstromquelle (402) verbunden ist;
eine zweite Stromversorgungseinheit (404), die mit einer zweiten Gleichstromquelle (403) verbunden ist; und
einen Steuerteil (430), der so konfiguriert ist, dass er die erste Stromversorgungseinheit (401) und die zweite Stromversorgungseinheit (404) steuert, wobei
die erste Stromversorgungseinheit (401) und die zweite Stromversorgungseinheit (404) sich gegenseitig Leistung übertragen,
die erste Stromversorgungseinheit (401) umfasst:
eine erste Übertragungsspule (L1);
ein erstes Schaltelement (SW1), das in Reihe mit der ersten Übertragungsspule (L1) geschaltet ist; und
einen ersten Resonanzkondensator (C1), der parallel entweder zur ersten Übertragungsspule (L1) oder zum ersten Schaltelement (SW1) oder zu beiden geschaltet ist,
die zweite Stromversorgungseinheit (404) umfasst:
eine zweite Übertragungsspule (L2);
ein zweites Schaltelement (SW2), das in Reihe mit der zweiten Übertragungsspule (L2) geschaltet ist; und
einen zweiten Resonanzkondensator (C2), der parallel entweder zur zweiten Übertragungsspule (L2) oder zum zweiten Schaltelement (SW2) oder zu beiden geschaltet ist, und
der Steuerteil (430) umfasst:
eine erste Einschaltsteuerschaltung (431, 432), die so konfiguriert ist, dass sie das Einschalten des ersten Schaltelements (SW1) synchron mit einer durch die erste Übertragungsspule (L1) und den ersten Resonanzkondensator (C1) induzierten Resonanzspannung steuert, sodass das erste Schaltelement (SW1) einen Nullspannungs-Schaltvorgang ausführt;
eine zweite Einschaltsteuerschaltung (433, 434), die so konfiguriert ist, dass sie das Einschalten des zweiten Schaltelements (SW2) synchron mit einer durch die zweite Übertragungsspule (L2) und den zweiten Resonanzkondensator (C2) induzierten Resonanzspannung steuert, sodass das zweite Schaltelement (SW2) einen Nullspannungs-Schaltvorgang ausführt; und
eine Kreuzphasenverschiebungs-Steuerschaltung (435, 436, 437, 438, 439), die so konfiguriert ist, dass sie eine Steuerung durchführt, um eine vorbestimmte Phasendifferenz zwischen dem Ausschalten des ersten Schaltelements (SW1) und dem Ausschalten des zweiten Schaltelements (SW2) zu bewirken, wobei
die Kreuzphasenverschiebungs-Steuerschaltung (435, 436, 437, 438, 439) so konfiguriert ist, dass sie einen Ausschaltzeitpunkt des zweiten Schaltelements (SW2) entsprechend einer Differenz zwischen einer Übertragungsleistung von der ersten Stromversorgungseinheit (401) zur zweiten Stromversorgungseinheit (404) und einem Soll-Leistungswert während der Leistungsübertragung von der ersten Stromversorgungseinheit (401) zur zweiten Stromversorgungseinheit (404) zu steuern und die Übertragungsleistung zu steuern, ohne eine Leitzeit des ersten Schaltelements (SW1) zu ändern, und wobei die erste Stromversorgungseinheit (401) ein Einzelschalter-Wandler ist, und
das erste Schaltelement (SW1) einen ersten Transistor (Q1), der in Reihe mit der ersten Übertragungsspule (L1) geschaltet ist, und eine erste Diode (D1), die antiparallel zum ersten Transistor (Q1) geschaltet ist, umfasst und an das erste Schaltelement (SW1) während der Leistungsübertragung eine unipolare Spannung angelegt wird, und
die erste Einschaltsteuerschaltung so konfiguriert ist, dass sie einen Nulldurchgang einer Spannung an beiden Enden der ersten Übertragungsspule (L1) oder des ersten Resonanzkondensators (C1) erfasst und den ersten Transistor (Q1) einschaltet, nachdem die erste Diode (D1) leitend geworden ist.

2. Drahtlose Stromversorgungsvorrichtung (400) nach Anspruch 1, wobei die Kreuzphasenverschiebungs-Steuerschaltung (435, 436, 437, 438, 439) umfasst:
einen Phasendifferenzdetektor (541), der so konfiguriert ist, dass er die Phasendifferenz direkt oder indirekt erfasst;
eine Phasendifferenz-Befehlsschaltung (542), die so konfiguriert ist, dass sie direkt oder indirekt einen Sollwert für die Phasendifferenz angibt;
einen Rückkopplungssteuerungsteil (543), der so konfiguriert ist, dass er die Phasendifferenz durch Rückkopplungssteuerung steuert, indem er einen Erfassungswert vom Phasendifferenzdetektor (541) und den Sollwert von der Phasendifferenz-Befehlsschaltung (542) vergleicht; und
einen leitzeitvariablen Teil (544), der so konfiguriert ist, dass er eine Leitzeit des zweiten Schaltelements (SW2) entsprechend einer Ausgabe des Rückkopplungssteuerungsteils (543) ändert.

3. Drahtlose Stromversorgungsvorrichtung (400) nach Anspruch 2, wobei,
der Phasendifferenzdetektor (541) die Phasendifferenz indirekt durch Erfassen der Übertragungsleistung erfasst, und
die Phasendifferenz-Befehlsschaltung (542) den Sollwert indirekt durch Angeben der Übertragungsleistung angibt.

4. Drahtlose Stromversorgungsvorrichtung (400) nach Anspruch 1, wobei die Kreuzphasenverschiebungs-Steuerschaltung (435, 436, 437, 438, 439) die Phasendifferenz steuert, um die Übertragungsleistung zwischen der ersten Übertragungsspule (L1) und der zweiten Übertragungsspule (L2) auf einen vorbestimmten Wert einzustellen.

5. Drahtlose Stromversorgungsvorrichtung (400) nach Anspruch 1, wobei,
das zweite Schaltelement (SW2) einen Transistor (Q2) und eine antiparallel zum Transistor (Q2) geschaltete antiparallele Diode (D2) umfasst, und
die Kreuzphasenverschiebungs-Steuerschaltung (435, 436, 437, 438, 439) umfasst:
einen Phasendifferenzdetektor (541), der so konfiguriert ist, dass er direkt oder indirekt die Phasendifferenz erfasst;
eine Phasendifferenz-Befehlsschaltung (542), die so konfiguriert ist, dass sie direkt oder indirekt einen Sollwert für die Phasendifferenz angibt;
einen Rückkopplungssteuerungsteil (543), der so konfiguriert ist, dass er die Phasendifferenz durch Rückkopplungssteuerung steuert, indem er einen Erfassungswert vom Phasendifferenzdetektor (541) und den Sollwert von der Phasendifferenz-Befehlsschaltung (542) vergleicht;
einen Resonanzstromsensor, der so konfiguriert ist, dass er einen Nulldurchgang eines durch die zweite Übertragungsspule (L2) fließenden Stroms erfasst; und
einen leitzeitvariablen Teil (544), der so konfiguriert ist, dass er eine Einschaltdauer des Transistors (Q2), die auf das Ausschalten der antiparallelen Diode (D2) folgt, entsprechend einem Erfassungsergebnis des Resonanzstromsensors und einer Ausgabe des Rückkopplungssteuerungsteils (543) steuert.

## Revendications

1. Appareil d'alimentation électrique sans fil (400) comprenant :
une première unité d'alimentation électrique (401) reliée à une première source d'alimentation CC (402) ;
une seconde unité d'alimentation électrique (404) reliée à une seconde source d'alimentation CC (403) ; et
une partie de commande (430) configurée pour commander la première unité d'alimentation électrique (401) et la seconde unité d'alimentation électrique (404), dans lequel
la première unité d'alimentation électrique (401) et la seconde unité d'alimentation électrique (404) se transmettent de l'énergie,
la première unité d'alimentation électrique (401) comporte :
une première bobine de transmission (L1) ;
un premier dispositif de commutation (SW1) connecté en série à la première bobine de transmission (L1) ; et
un premier condensateur résonant (C1) connecté en parallèle soit à la première bobine de transmission (L1), soit au premier dispositif de commutation (SW1), soit aux deux,
la seconde unité d'alimentation électrique (404) comporte :
une seconde bobine de transmission (L2) ;
un second dispositif de commutation (SW2) connecté en série à la seconde bobine de transmission (L2) ; et
un second condensateur résonant (C2) connecté en parallèle soit à la seconde bobine de transmission (L2), soit au second dispositif de commutation (SW2), soit aux deux, et
la partie de commande (430) comporte :
un premier circuit de commande de déblocage (431, 432) configuré pour commander le déblocage du premier dispositif de commutation (SW1) en synchronisation avec une tension résonante induite par la première bobine de transmission (L1) et le premier condensateur résonant (C1) de manière que le premier dispositif de commutation (SW1) effectue une opération de commutation à tension nulle ;
un second circuit de commande de déblocage (433, 434) configuré pour commander le déblocage du second dispositif de commutation (SW2) en synchronisation avec une tension résonante induite par la seconde bobine de transmission (L2) et le second condensateur résonant (C2) de manière que le second dispositif de commutation (SW2) effectue une opération de commutation à tension nulle ; et
un circuit de commande de déphasage croisé (435, 436, 437, 438, 439) configuré pour effectuer une commande pour provoquer une différence de phase prédéterminée entre le blocage du premier dispositif de commutation (SW1) et le blocage du second dispositif de commutation (SW2), dans lequel
le circuit de commande de déphasage croisé (435, 436, 437, 438, 439) est configuré pour commander un moment de blocage du second dispositif de commutation (SW2) en fonction d'une différence entre une puissance de transmission de la première unité d'alimentation électrique (401) à la seconde unité d'alimentation électrique (404) et une valeur de puissance cible pendant la transmission de puissance de la première unité d'alimentation électrique (401) à la seconde unité d'alimentation électrique (404) et pour commander la puissance de transmission sans modifier un temps de conduction du premier dispositif de commutation (SW1), et dans lequel la première unité d'alimentation électrique (401) est un convertisseur à commutateur unique, et
le premier dispositif de commutation (SW1) comporte un premier transistor (Q1) connecté en série à la première bobine de transmission (L1) et une première diode (D1) connectée de manière antiparallèle au premier transistor (Q1), et le premier dispositif de commutation (SW1) est appliqué avec une tension unipolaire pendant la transmission de puissance, et
le premier circuit de commande de déblocage est configuré pour détecter un point de passage à zéro d'une tension aux deux extrémités de la première bobine de transmission (L1) ou du premier condensateur résonant (C1) et pour débloquer le premier transistor (Q1) après que la première diode (DI) est devenue conductrice.

2. Appareil d'alimentation électrique sans fil (400) selon la revendication 1, dans lequel le circuit de commande de déphasage croisé (435, 436, 437, 438, 439) comprend :
un détecteur de différence de phase (541) configuré pour détecter directement ou indirectement la différence de phase ;
un circuit d'instruction de différence de phase (542) configuré pour indiquer directement ou indirectement une valeur cible pour la différence de phase ;
une partie de commande de rétroaction (543) configurée pour commander la différence de phase par une commande de rétroaction comparant une valeur de détection provenant du détecteur de différence de phase (541) et la valeur cible provenant du circuit d'instruction de différence de phase (542) ; et
une partie de variable de temps de conduction (544) configurée pour modifier un temps de conduction du second dispositif de commutation (SW2) conformément à une sortie provenant de la partie de commande de rétroaction (543).

3. Appareil d'alimentation électrique sans fil (400) selon la revendication 2, dans lequel :
le détecteur de différence de phase (541) détecte indirectement la différence de phase en détectant la puissance de transmission, et
le circuit d'instruction de différence de phase (542) indique indirectement la valeur cible en indiquant la puissance de transmission.

4. Appareil d'alimentation électrique sans fil (400) selon la revendication 1, dans lequel le circuit de commande de déphasage croisé (435, 436, 437, 438, 439) commande la différence de phase pour ajuster la puissance de transmission entre la première bobine de transmission (L1) et la seconde bobine de transmission (L2) à une valeur prédéterminée.

5. Appareil d'alimentation électrique sans fil (400) selon la revendication 1, dans lequel :
le second dispositif de commutation (SW2) comporte un transistor (Q2) et une diode anti-parallèle (D2) connectée de manière anti-parallèle au transistor (Q2), et
le circuit de commande de déphasage croisé (435, 436, 437, 438, 439) comporte :
un détecteur de différence de phase (541) configuré pour détecter directement ou indirectement la différence de phase ;
un circuit d'instruction de différence de phase (542) configuré pour indiquer directement ou indirectement une valeur cible pour la différence de phase ;
une partie de commande de rétroaction (543) configurée pour commander la différence de phase par une commande de rétroaction comparant une valeur de détection provenant du détecteur de différence de phase (541) et la valeur cible provenant du circuit d'instruction de différence de phase (542) ;
un capteur de courant résonant configuré pour détecter un point de passage à zéro d'un courant circulant à travers la seconde bobine de transmission (L2) ; et
une partie de variable de temps de conduction (544) configurée pour commander un temps de déblocage du transistor (Q2) qui suit le blocage de la diode antiparallèle (D2), conformément à un résultat de détection provenant du capteur de courant résonant et à une sortie de la partie de commande de rétroaction (543).
